# EUROPEAN PATENT SPECIFICATION

(11) **EP 4 374 763 B1**
(45) Date of publication and mention of the grant of the patent: **02.09.2026**
(21) Application number: 22846119.0
(22) Date of filing: 12.07.2022
(51) Int. Cl.: A47L 9/28, G06T 11/20, G01C 21/20, G01C 21/22, G01C 21/34, G01C 21/00

(54) **ROBOTIC CLEANER AND METHOD FOR CONTROLLING ROBOTIC CLEANER**
ROBOTISCHER REINIGER UND VERFAHREN ZUR STEUERUNG DES ROBOTISCHEN REINIGERS
ROBOT NETTOYEUR ET PROCÉDÉ DE COMMANDE D'UN ROBOT NETTOYEUR

(30) Priority: 22.07.2021 KR 20210096541
(43) Date of publication of application: 29.05.2024
(73) Proprietor: LG Electronics Inc., Yeongdeungpo-gu Seoul 07336 (KR)
(72) Inventor: YOON, Sangyol, Seoul 08592 (KR); SIM, Miyoung, Seoul 08592 (KR); JEON, Jongbeom, Seoul 08592 (KR)
(74) Representative: Mooser, Sebastian Thomas
(86) International application number: PCT/KR2022/010141
(87) International publication number: WO 2023/003249

(56) References cited:
- JP-A- 2019 536 601
- JP-A- 2020 004 342
- KR-A- 20170 053 351
- KR-A- 20190 091 508
- KR-A- 20190 098 734
- US-A1- 2017 131 721
- US-A1- 2021 007 572
- US-A1- 2021 018 929
- JINWOOK HUH ET AL: "Mobile Robot Exploration in Indoor Environment Using Topological Structure with Invisible Barcode", 2006 IEEE/RSJ INTERNATIONAL CONFERENCE ON INTELLIGENT ROBOTS AND SYSTEMS, 1 October 2006 (2006-10-01), pages 5265 - 5272, XP055558400, ISBN: 978-1-4244-0259-5, DOI: 10.1109/IROS.2006.282025

## Description

### [Technical Field]

The present disclosure relates to a mobile robot, and specifically, to a robotic cleaner and a method for controlling the robotic cleaner. More specifically, the present disclosure relates to a sensing and control technology of a robotic cleaner for generating traveling maps.

### [Background Art]

A representative example of a bot is a robotic cleaner.

Various technologies for detecting an environment and a user around the robotic cleaner through various sensors provided in the robotic cleaner are known. In addition, technologies which allow the robotic cleaner to learn and map a cleaning region by itself and to determine a current position on a map are known. A robotic cleaner that travels and cleans the cleaning region in a preset manner is known.

A map of a traveling region needs to be accurately generated in order to perform a predetermined task, such as cleaning, and the current position of the mobile robot on the map needs to be accurately determined in order to move to a specific point in the traveling region.

In the case of the related art (Korean Patent Application Publication No. 10-2010-0031878), a technology is disclosed such that a path is generated on the basis of the degrees of uncertainty of features extracted from an image obtained while a robotic cleaner explores unknown surroundings, and the robotic cleaner travels along the generated path. The path based on the degrees of uncertainty of the features is generated to increase the accuracy of a feature map of the robotic cleaner or accuracy in self localization.

In addition, another related art (Korean Patent Application Publication No. 2021-0009011 and its family member US2021/018929A1 disclose conducting search traveling to create a map for traveling during cleaning.

In another related art as above, when search traveling is performed to create a map, data within a real-time sensing range is acquired for traveling in an unknown area, nodes are set accordingly, and a grid map is calculated based on the node information. For such a grid map, map information is generated by searching for boundaries based on image data and providing an updated final grid map.

However, in another related art as above, a robot acquires only data within the sensing range in real time while traveling and generates a basic map based thereon. Accordingly, for the boundary found in an image, there is a risk that obstacles may occur between the current robot position and the boundary that make traveling impossible.

In addition, in another related art as above, while the robot is traveling, a topology node is added to the path at a location where additional search is required to indicate that future search traveling is necessary.

However, in the related art, when a node is generated on the driving path where additional search is required, the direction requiring additional traveling at the relevant node is divided into sections for display. When the initial direction of a robot does not match the angle of the structure inside a building and the further traveling direction, the direction setting may be misaligned, making traveling difficult.

### [Related art documents]

### [Patent documents]

(Patent Document 1) Korean Patent Application Publication No. 10-2010-0031878A
(Patent Document 2) Korean Patent Application Publication No. 10-2021-0009011A
(Patent Document 3) United States Patent Application Publication No. US2021/018929A1

### [Disclosure]

### [Technical Problem]

An aspect of the present disclosure is directed to providing a map generation method capable of minimizing unnecessary traveling when performing search traveling for a space where traveling is required.

As explained above, in Korean Patent Application Publication No. 10-2021-0009011, a grid map is generated in real time based on real-time sensing information and a topology map is generated, so the direction is set directly from the current position toward an area requiring additional search traveling.

However, since the current robot is not located in the exact center of a passage and the robot frequently travels such as along walls, additional search traveling may be performed to contact the passage. In other words, in such cases, evasive traveling is performed to prevent collision with obstacles due to path changes, resulting in wasteful motion. Another aspect of the present disclosure is directed to providing a control method capable of reducing evasive traveling by setting a robot to travel to the center of the passage during such additional search traveling.

Yet another aspect of the present disclosure is directed to providing a control method that first enters a search space with the widest width by comparing the open width of each child node when selecting a child node to move from one parent node by providing parent-children relationships between other nodes connected to one node.

This type of priority traveling may improve Slam performance and provides a control method capable of providing as much information as possible first to other nodes that enter later.

### [Technical Solution]

A robotic cleaner according to an aspect of the present disclosure includes: a traveling unit for moving a body in a traveling region; a distance measuring sensor for acquiring distance sensing information about a distance to an object outside the body; and a control unit which generates a grid map about the traveling region from the distance sensing information, performs, when dividing the traveling region into a plurality of sub-areas, ray casting on a plurality of traveling nodes on a path of the grid map with respect to each sub-area to search for an open space, and sets an open node for the open space to calculate a topology graph between the traveling nodes and the open node.

When the traveling region is divided into a plurality of sub-areas as such and information about each sub-area is obtained, a grid map and a topology graph are generated therefor, and a node may be set to the center of a passage without performing node selection in real time.

The distance measuring sensor may include a LiDAR sensor that irradiates light to an object outside the body and calculates the distance sensing information by reflected light.

The sub-area may be allocated as a surface area when the robotic cleaner travels the travel region for a predetermined time or by a predetermined distance.

The control unit searches for an open space by executing the ray casting for each of the plurality of traveling nodes within the grid map with respect to each of the sub-areas, and sets the open node for each of the open spaces.

The control unit may set the open node in a central area of a width of the open space.

When the open space is formed between two obstacles that are spaced apart without a step, the control unit may set the open node in the central area of a separation distance between the two obstacles.

When the open space is formed between two obstacles spaced apart by a step, the control unit may set the open node at an intersection of a center line between the two obstacles and a vertical line of the traveling node.

When the topology graph for the sub-area is generated, the control unit may move to one of the open nodes of a last traveling node, change the moved open node to a closed node, and then move to the remaining open nodes in the topology graph and partition another sub-area.

The control unit may move to the open node with the largest width among a plurality of open nodes of the last traveling node.

The control unit may determine that the robotic cleaner may travel by the ray casting from the traveling node and that a space in which the robotic cleaner has not previously travelled is the open space.

The control unit may perform 360-degree ray casting around the traveling node.

The control unit may set a first open node for one open space searched for a first traveling node, and set a second open node for another open space searched for a second traveling node that is different from the first traveling node. When it is determined that the first open node and the second open node overlap, one of the overlapping first and second open nodes may be deleted.

The control unit may determine whether the first open node and the second open node overlap when widths of the one open space and the other open space overlap by a predetermined range or more.

The control unit may generate circles of the same diameter centered on the first open node and the second open node, and determine that the first open node and the second open node are related to the same open node when each circle overlaps by a predetermined range or more.

Among the first open node and the second open node, one open node adjacent to the central area of the open area where the first and second open nodes are located may be left, and the other open node may be deleted.

The control unit may calculate a final topology graph for the traveling region by connecting the topology graphs for the plurality of sub-areas.

The control unit may process the grid map as an image to calculate a final map.

An embodiment provides a method for controlling a robotic cleaner, wherein the method includes: obtaining distance sensing information about a distance to an object outside a body while moving in an unknown traveling region; generating a grid map for the traveling region from the distance sensing information; dividing the traveling region into a plurality of sub-areas and performing ray casting on a plurality of traveling nodes on a path of the grid map with respect to each of the sub-areas to search for open space; setting an open node for the open space to generate a topology graph between the traveling node and the open node for the sub-area; and generating a final topology graph for the traveling region by connecting the topology graphs for the plurality of sub-areas.

In the generation of the topology graph, when the open space is formed between two obstacles that are spaced apart without a step, the open node is set in a central area of a separation distance between the two obstacles, and when the open space is formed between two obstacles spaced apart by a step, the open node is set at an intersection of a center line between the two obstacles and a vertical line of the traveling node.

The generation of the topology graph may include: setting, by a first open node, one open space searched for a first traveling node, and setting, by a second open node, another open space searched for a second traveling node that is different from the first traveling node; determining whether the first open node and the second open node overlap when widths of the one open space and the another open space overlap by a predetermined range or more; generating circles of the same diameter centered on the first open node and the second open node, and determining that the first open node and the second open node are related to the same open node when each circle overlaps by a predetermined range or more; and leaving, among the first open node and the second open node, one open node adjacent to the central area of the open area where the first and second open nodes are located and deleting the other open node.

### [Advantageous Effects]

In accordance with the present disclosure, one or more benefits are provided as follows.

First, efficiency can be improved by minimizing unnecessary traveling when traveling for searching for a space in which additional traveling is required.

Furthermore, avoidance traveling can be reduced by setting the cleaner to travel along the center of a passage during additional search traveling.

In addition, when a child node is selected to move from one parent node, by comparing the open width of each child node, Slam performance can be improved by first entering the search space with the largest width, and as much information as possible can be provided first to other nodes that enter later.

The benefits of the present disclosure are not limited to those mentioned above, and other benefits not mentioned may be clearly understood by those skilled in the art from the following description.

### [Description of Drawings]

FIG. 1 is a perspective view of a robotic cleaner and a charging stand for charging the robotic cleaner according to an embodiment of the present disclosure.
FIG. 2 is an elevation view of the robotic cleaner of FIG. 1 viewed from the upper side.
FIG. 3 is an elevation view of the robotic cleaner of FIG. 1 viewed from the front.
FIG. 4 is an elevation view of the robotic cleaner of FIG. 1 viewed from the lower side.
FIG. 5 is a diagram illustrating an example of a robotic cleaner according to another embodiment of the present disclosure.
FIG. 6 is a block diagram illustrating a control relationship between main components of the robotic cleaner of FIG. 1 or 5.
FIG. 7 is a diagram explaining the operation of a LiDAR sensor provided in a robotic cleaner according to an embodiment of the present disclosure.
FIG. 8 is a flowchart of a process for generating a map of the robotic cleaner according to an embodiment of the present disclosure.
FIGS. 9A to 9C are diagrams illustrating the process for generating the map of the robotic cleaner according to the flowchart of FIG. 8.
FIG. 10 is a diagram illustrating a portion of a topology graph of the robotic cleaner according to the flowchart of FIG. 8.
FIG. 11 is a diagram illustrating a flowchart for searching the open node of FIG. 8.
FIGS. 12A and 12B are diagrams illustrating the non-stepped open space of FIG. 11.
FIGS. 13A and 13B are diagrams illustrating an embodiment of the stepped open space of FIG. 11.
FIGS. 14A and 14B are diagrams illustrating another embodiment of the stepped open space of FIG. 11.
FIG. 15 is a diagram illustrating another flowchart for searching the open node of FIG. 8.
FIG. 16 is a diagram illustrating the search of the robotic cleaner showing the operation of FIG. 15.
FIG. 17 is a diagram illustrating the process of the duplicate removal of FIG. 15.
FIG. 18A illustrates open space search according to a comparative example, and FIG. 18B illustrates open space search according to an embodiment of the present disclosure.
FIG. 19A illustrates multiple open space search according to a comparative example, and FIG. 19B illustrates duplicate removal during open space search according to an embodiment of the present disclosure.
FIG. 20A shows an unsearched area according to a comparative example, and FIG. 20B shows the open space searched by an embodiment of the present disclosure.

### [Mode for Disclosure]

In the linguistically/mathematically expressed size comparison throughout this document, the terms "less than or equal to (smaller than or equal to)" and "less than (below)" can be readily substituted from the point of view of ordinary expert, the terms "greater than or equal to (more than or equal to)" and "greater than (above)" can be readily substituted from the point of view of ordinary expert, and it is obvious that such a substitution does not incur a problem in exhibiting its effect.

A mobile robot 100 according to an embodiment of the present disclosure refers to a robot capable of moving on its own using wheels and the like, and may be a domestic robot, a robotic cleaner, etc.

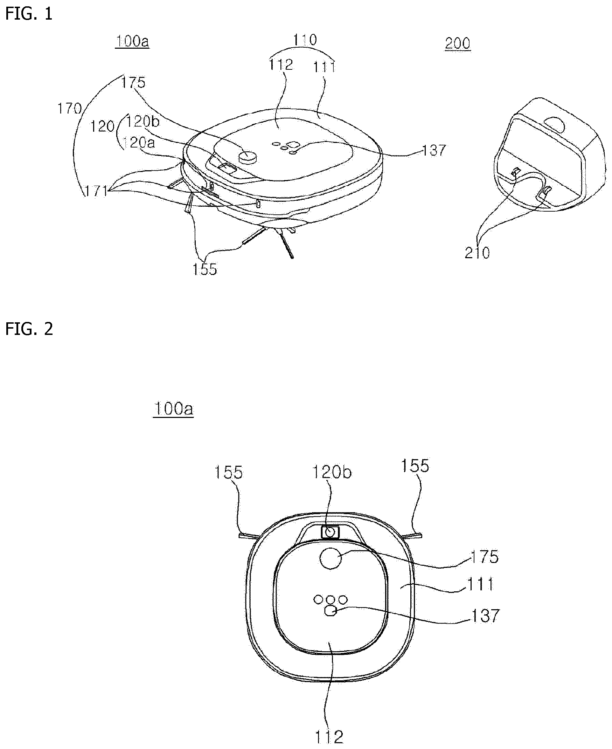

FIGS. 1 to 4 are views illustrating external appearances of a robotic cleaner and a charging stand that charges the robotic cleaner according to an embodiment of the present disclosure.

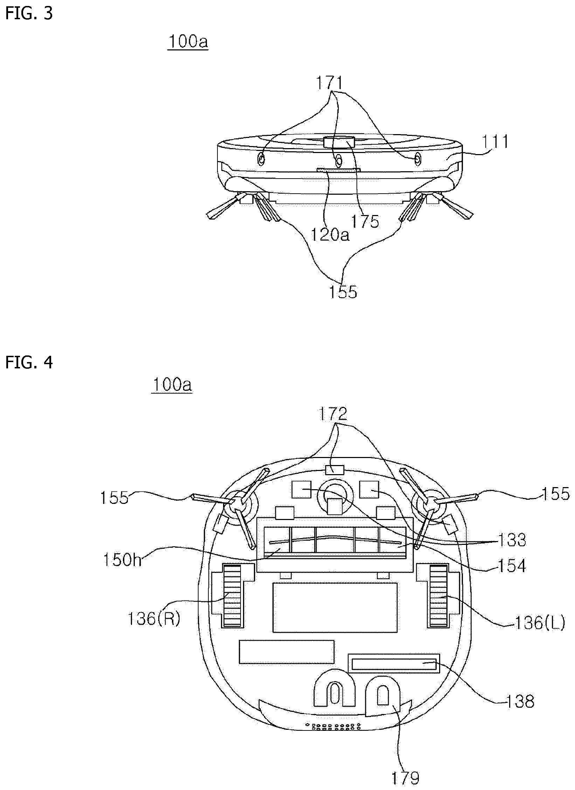

FIG. 1 is a perspective view showing a robotic cleaner and a charging stand that charges the robotic cleaner according to an embodiment of the present disclosure. FIG. 2 is an elevation view of the robotic cleaner of FIG. 1 viewed from the upper side, FIG. 3 is an elevation view of the robotic cleaner of FIG. 1 viewed from the front, and FIG. 4 is an elevation view of the robotic cleaner of FIG. 1 viewed from the lower side.

The robotic cleaner 100 includes a body 110. Hereinafter, in defining each portion of the body 110, a portion facing the ceiling in a traveling region may be defined as a top portion *(see* FIG. 2), a portion facing the bottom in the traveling region may be defined as a bottom portion *(see* FIG. 4), and a portion facing a traveling direction among the portions forming the circumference of the body 110 between the top portion and the bottom portion may be defined as a front portion *(see* FIG. 3). Further, a portion of the body 110 facing the opposite direction to the front portion may be defined as a rear portion. The body 110 may include a case 111 forming a space in which various parts configuring the robotic cleaner 100 are accommodated.

The robotic cleaner 100 may include, for example, at least one drive wheel 136 for moving the body 110. The drive wheel 136 may be driven and rotated by, for example, at least one motor (not shown) connected to the drive wheel 136.

The drive wheels 136 may be provided on the left side and the right side of the body 110, respectively, and such drive wheels 136 are hereinafter referred to as a left wheel 136(L) and a right wheel 136(R), respectively.

The left wheel 136(L) and the right wheel 136(R) may be driven by a single drive motor, but, if necessary, may be provided with a left wheel drive motor for driving the left wheel 136(L) and a right wheel drive motor for driving the right wheel 136(R). The traveling direction of the body 110 may be switched to the left or right side with a difference in the rotational speeds of the left wheel 136(L) and the right wheel 136(R).

The robotic cleaner 100 may include, for example, an intake unit 330 for intaking foreign matter, brushes 154 and 155 for performing brushing, a dust bin for storing collected foreign matter, a mop unit for performing mopping, and the like.

For example, an intake port 150h in which air is intaken may be provided on a bottom surface of the body 110, and an intaking device providing a suction force to allow air to be intaken through the intake port 150h and a dust bin collecting dust intaken together with air through the intake port 150h may be provided in the body 110.

The robotic cleaner 100 may include, for example, a case 111 forming a space in which various parts configuring the robotic cleaner 100 are accommodated. An opening (not shown) for insertion and removal of the dust bin may be provided in the case 111, and a dust bin cover 112 that opens and closes the opening may be provided to be rotatable with respect to the case 111.

The robotic cleaner 100 may include, for example, a roll-type main brush 154 having brushes exposed through the intake port 150h and an auxiliary brush 155 located on a front side of the bottom surface of the body 110 and having a brush including a plurality of radially extended wings. Dust is separated from a floor in a traveling region by rotation of these brushes 154 and 155, and the dust separated from the floor may be intaken through the intake port 150h and introduced into the dust bin through the intake unit 330.

Air and dust may be separated from each other, while passing through a filter or a cyclone of the dust bin, and the separated dust may be collected in the dust bin and air may be discharged from the dust bin, may pass through an exhaust flow path (not shown) in the body 110, and may finally be discharged to the outside through an exhaust port (not shown).

The battery 138 may supply, for example, power required for the overall operation of the robotic cleaner 100 as well as the driving motor. When the battery 138 is discharged, the robotic cleaner 100 may perform traveling to return to a charging stand 200 for charging. During such return traveling, the robotic cleaner 100 itself may detect a location of the charging stand 200.

The charging stand 200 may include, for example, a signal transmission unit (not shown) that transmits a predetermined return signal. The return signal may be, for example, an ultrasonic signal or an infrared signal, but is not limited thereto.

The robotic cleaner 100 may include, for example, a signal detection unit (not shown) that receives the return signal.

For example, the signal detection unit may include an infrared sensor that detects an infrared signal and may receive an infrared signal transmitted from a signal transmission unit of the charging stand 200. Herein, the robotic cleaner 100 may move to the location of the charging stand 200 according to the infrared signal transmitted from the charging stand 200 and dock with the charging stand 200. A charging terminal 133 of the robotic cleaner 100 and a charging terminal 210 of the charging stand 200 may be brought into contact with each other by the docking and the battery 138 may be charged.

The robotic cleaner 100 may include a component that detects information inside/outside the robotic cleaner 100.

The robotic cleaner 100 may include, for example, a camera 120 that acquires image information on a traveling region.

For example, the robotic cleaner 100 may include a front camera 120a provided to acquire an image of a front of the body 110.

For example, the robotic cleaner 100 may include an upper camera 120b provided on an upper surface portion of the body 110 and acquire an image of a ceiling in the traveling region.

For example, the robotic cleaner 100 may further include with a lower camera 179 provided on the bottom surface of the body 110 and acquiring an image of the floor.

The number of the cameras 120 provided in the robotic cleaner 100, the location at which the cameras 120 are disposed, and an image capture range are not necessarily limited, and the cameras 120 may be arranged at various locations to acquire image information on the traveling region.

For example, the robotic cleaner 100 may include a camera (not shown) disposed to be inclined with respect to one surface of the body 110 and configured to photograph a front side and an upper side together.

For example, the robotic cleaner 100 may include a plurality of front cameras 120 a and/or upper cameras 120b or may include a plurality of cameras configured to photograph the front side and the upper side together.

According to various embodiments of the present disclosure, the camera 120 may be installed on a part (for example, front, rear, and bottom) of the robotic cleaner 100 and continuously acquire images during traveling or cleaning. For image capture efficiency, a plurality of cameras 120 may be installed for each part, and an image captured by the camera 120 may be used to recognize materials such as dust, hair, or a floor existing in a corresponding space, determine whether cleaning is to be performed, or check a cleaning time.

The robotic cleaner 100 may include a light detection and ranging (LiDAR) sensor 175 that acquires external geometry information of the body 110 using a laser.

The LiDAR sensor 175 may output a laser and receive a laser reflected from an object, thereby acquiring information such as a distance to the object that reflects the laser, a location direction, a material, and the like of the object and acquiring geometry information of the traveling region. The mobile robot 100 may acquire, for example, 360-degree geometry information based on the information acquired through the LiDAR sensor 175.

The robotic cleaner 100 may also include sensors 171, 172, and 179 that sense various pieces of data related to the operation and state of the robotic cleaner 100.

The robotic cleaner 100 may include an obstacle detection sensor 171 that detects an obstacle on the front, a cliff detection sensor 172 that detects the presence of a cliff on the floor in the traveling region, and the like.

The robotic cleaner 100 may include an operation unit 137 for inputting various commands such as power on/off of the robotic cleaner 100, and various control commands required for overall operation of the robotic cleaner 100 may be received through the operation unit 137.

The robotic cleaner 100 may include an output unit (not shown), and display reservation information, a battery status, an operation mode, an operation status, an error status, and the like.

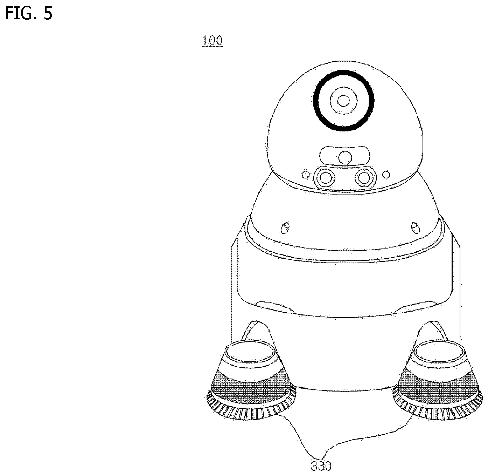

FIG. 5 is a view illustrating an example of a robotic cleaner according to another embodiment of the present disclosure.

The robotic cleaner 100 illustrated in FIG. 5 includes components which are the same as or similar to the robotic cleaner 100 illustrated in FIGS. 1 to 4, and functions as a robotic cleaner applicable to a large space.

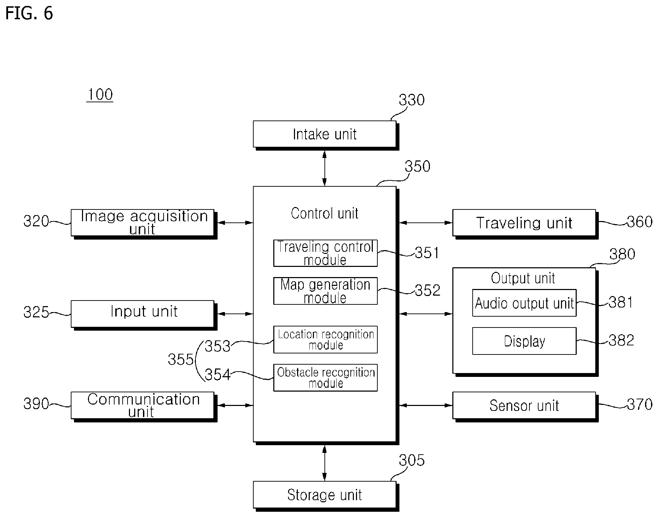

FIG. 6 is a block diagram showing a control relationship between main components of a robotic cleaner according to an embodiment of the present disclosure.

Referring to FIG. 6, the robotic cleaner 100 may include a storage unit 305, an image acquisition unit 320, an input unit 325, the intake unit 330, a control unit 350, and a traveling unit 360, a sensor unit 370, an output unit 380, and/or a communication unit 390.

The storage unit 305 may store various information necessary for the control of the robotic cleaner 100.

The storage unit 305 may include a volatile or nonvolatile recording medium. The recording medium, which stores data that may be read by a microprocessor, is not limited in type or implementation method.

The storage unit 305 may store a map for the traveling region. The map stored in the storage unit 305 may be input from an external terminal, a server, or the like capable of exchanging information with the robotic cleaner 100 through wired or wireless communication or may be generated by the robotic cleaner 100 itself through learning.

The storage unit 305 may store data for a sub-area. Herein, the sub-area may refer to a divided region having a certain distance or a certain surface area in the traveling region. Data for the sub-area may include LiDAR sensing data obtained while traveling in the corresponding sub-area, information on each node for the corresponding LiDAR sensing data, and information on the direction of movement in each node.

The storage unit 305 may store various pieces of map information.

The map may display the locations of rooms within the traveling region. Additionally, the current position of the robotic cleaner 100 may be displayed on the map, and the current position of the robotic cleaner 100 on the map may be updated during a traveling process.

The storage unit 305 may store cleaning history information. Such cleaning history information may be generated each time cleaning is performed.

The map for a traveling region stored in the storage unit 305 may be, for example, a navigation map used for traveling during cleaning, and a simultaneous localization and mapping (SLAM) used for location recognition, a learning map used during learning cleaning by storing corresponding information in the case of a collision with an obstacle or the like, a global topological map used for used for recognizing a global location, a cell data-based grid map, an obstacle recognition map in which information regarding a recognized obstacle is recorded, and the like.

Maps may be separately stored and managed in the storage unit 305 for each use, but the maps may not be clearly classified for each use. For example, a plurality of pieces of information may be stored in one map for use in at least two or more purposes.

The image acquisition unit 320 may acquire an image around the robotic cleaner 100. The image acquisition unit 320 may include at least one camera (for example, the camera 120 of FIG. 1).

The image acquisition unit 320 may include, for example, a digital camera. The digital camera may include an image sensor (for example, a CMOS image sensor) including at least one optical lens and a plurality of photodiodes (for example, pixels) on which an image is formed by light passing through the optical lens and a digital signal processor (DSP) that configures an image based on a signal output from the photodiodes. The DSP may create, for example, a still image as well as a moving image composed of frames including still images.

The image acquisition unit 320 may photograph a situation of an obstacle existing on the front of a traveling direction of the robotic cleaner 100 or a cleaning region.

According to an embodiment of the present disclosure, the image acquisition unit 320 may acquire a plurality of images by continuously photographing the surroundings of the body 110, and the plurality of acquired images may be stored in the storage unit 305.

The robotic cleaner 100 may increase accuracy of obstacle recognition by using a plurality of images or increase the accuracy of obstacle recognition by using effective data by selecting one or more of the plurality of images.

The input unit 325 may include an input device (for example, a key, a touch panel, etc.) capable of receiving a user input. The input unit 325 may include an operation unit 137 capable of inputting various commands such as power on/off of the robotic cleaner 100.

The input unit 325 may receive a user input through the input device and transmit a command corresponding to the received user input to the control unit 350.

The intake unit 330 may intake air containing dust. The intake unit 330 may include, for example, an intake device (not shown) that intakes foreign matter, brushes 154 and 155 that perform brushing, a dust bin (not shown) storing foreign matter collected by the intake device or the brushes (for example, brushes 154 and 155 of FIG. 3), an intake port (for example, intake port 150h of FIG. 4) intaking air.

The traveling unit 360 may move the robotic cleaner 100. The traveling unit 360 may include, for example, at least one driving wheel 136 for moving the robotic cleaner 100 and at least one motor (not shown) for rotating the driving wheel.

The sensor unit 370 may include a distance measuring sensor that measures a distance to an object outside the body 110. The distance measuring sensor may include the LiDAR sensor 175 described above.

The robotic cleaner 100 according to an embodiment of the present disclosure may generate a map by recognizing distances to objects sensed by the LiDAR sensor 175 and locations, directions, and the like of the objects.

The robotic cleaner 100 according to an embodiment of the present disclosure may acquire geometry information of the traveling region by analyzing a laser reception pattern such as a time difference or signal strength of the laser reflected and received from the outside. In addition, the robotic cleaner 100 may generate a map using the geometry information acquired through the LiDAR sensor 175.

For example, the robotic cleaner 100 according to the present disclosure may perform LiDAR slam to determine a movement direction by analyzing surrounding geometry information acquired at the current position through the LiDAR sensor 175.

More preferably, the robotic cleaner 100 according to the present disclosure effectively recognizes an obstacle through a vision-based location recognition using a camera and a LiDAR-based location recognition technology using a laser and an ultrasonic sensor, and generate a map by extracting an optimal movement direction with small variance.

The sensor unit 370 may include an obstacle detection sensor 171 for detecting an obstacle on the front, a cliff detection sensor 172 for detecting the presence or absence of a cliff on the floor in the traveling region, and the like.

The obstacle detection sensor 171 may be provided in plurality at predetermined intervals on an outer circumferential surface of the robotic cleaner 100. The obstacle detection sensor 171 may include an infrared sensor, an ultrasonic sensor, a radio frequency (RF) sensor, a geomagnetic sensor, a location sensitive device (PSD) sensor, and the like.

The obstacle detection sensor 171 may be a sensor that detects a distance to an indoor wall or an obstacle, and hereinafter, an ultrasonic sensor will be described but the present disclosure is not limited in type.

The obstacle detection sensor 171 may sense an object existing in a traveling (movement) direction of the robotic cleaner 100, particularly, an obstacle, and transmit obstacle information to the control unit 350. In other words, the obstacle detection sensor 171 may detect a movement passage of the robotic cleaner 100, a projecting object present on the front or side of the robotic cleaner 100, furniture, a wall surface, a wall edge, and the like of a house and transfer corresponding information to the control unit 350.

The sensor unit 370 may further include a traveling detection sensor (not shown) that detects a traveling operation of the robotic cleaner 100 and outputs operation information. The traveling detection sensor may include, for example, a gyro sensor, a wheel sensor, an acceleration sensor, and the like.

The gyro sensor may detect a rotation direction and a rotation angle when the robotic cleaner 100 moves according to an operation mode. The gyro sensor may detect an angular velocity of the robotic cleaner 100 and output a voltage value proportional to the angular velocity.

The wheel sensor may be connected to the driving wheel 136 (for example, left wheel 136(L) and right wheel 136(R)) of FIG. 4) to determine the number of revolutions of the driving wheel 136.

The acceleration sensor may detect a change in speed of the robotic cleaner 100. The acceleration sensor may be attached to a location adjacent to the driving wheel 136 or may be embedded in the control unit 350.

The output unit 380 may include an audio output unit 381 that outputs an audio signal. The audio output unit may output a notification message such as a warning sound, an operation mode, an operation state, and an error state, information corresponding to a user's command input, and processing results corresponding to a user's command input by a sound.

The audio output unit 381 may convert an electrical signal from the control unit 150 into an audio signal and output the same. To this end, the audio output unit may include a speaker or the like.

The output unit 380 nay include a display 382 that displays information corresponding to a user's command input, a processing result corresponding to the user's command input, an operation mode, an operation state, an error state by an image.

According to an embodiment, the display 382 may be configured as a touch screen by forming an inter-layer structure with a touch pad. In this case, the display 382 configured as a touch screen may be used as an input device capable of inputting information by a user's touch in addition to the output device.

The communication unit 390 may include at least one communication module (not shown) and transmit and receive data to and from an external device. Among external devices that communicate with the robotic cleaner 100, an external terminal may include, for example, an application for controlling the robotic cleaner 100, display a map of a traveling region to be cleaned by the robotic cleaner 100 through execution of the application, and designate a region to clean a specific region on the map.

The communication unit 390 may transmit and receive signals using a wireless communication method such as Wi-Fi, Bluetooth, beacon, ZigBee, and radio frequency identification (RFID).

The power supply unit may supply driving power and operating power to each component of the robotic cleaner 100.

The robotic cleaner 100 may further include a battery detection unit (not shown) that detects a remaining battery capacity of the battery 138, a charging state thereof, and the like and transmits detection results to the control unit 350.

The control unit 350 may be connected to each component provided in the robotic cleaner 100. The control unit 350 may transmit and receive signals to and from each component provided in the robotic cleaner 100 and control the overall operation of each component, for example.

The control unit 350 may determine a state of the inside/outside of the robotic cleaner 100 based on the information acquired through the sensor unit 370.

The control unit 350 may calculate a rotation direction and a rotation angle using a voltage value output from the gyro sensor.

The control unit 350 may calculate a rotation speed of the driving wheel 136 based on the number of resolutions output from the wheel sensor. In addition, the control unit 350 may calculate a rotation angle based on a difference in the number of revolutions of the left wheel 136(L) and the right wheel 136(R).

The control unit 350 may determine a change in state of the robotic cleaner 100 such as starting, stopping, turning, and colliding with an object based on a value output from the acceleration sensor. Meanwhile, the control unit 350 may detect an impact amount based on a change in speed based on the value output from the acceleration sensor, and thus the acceleration sensor may perform the function of an electronic bumper sensor.

The control unit 350 may detect a location of an obstacle based on at least two or more signals received through the ultrasonic sensor and control movement of the robotic cleaner 100 according to the detected location of the obstacle.

According to an embodiment, the obstacle detection sensor 131 provided on the outer surface of the robotic cleaner 100 may include a transmitter and a receiver.

For example, the ultrasonic sensor may be provided such that at least one transmitter and at least two receivers stagger. Accordingly, the transmitter may emit ultrasonic signals at various angles, and at least two or more receivers may receive ultrasonic signals reflected from obstacles at various angles.

According to an embodiment, the signal received from the ultrasonic sensor may be subjected to a signal processing process such as amplification or filtering, and then a distance to the obstacle and a direction of the obstacle may be calculated.

The control unit 350 may include a traveling control module 351, a Map generation module 352, a location recognition module 353, and/or an obstacle recognition module 354. In this drawing, for convenience of explanation, the traveling control module 351, the Map generation module 352, the location recognition module 353, and/or the obstacle recognition module 354 are described separately, but the present disclosure is limited thereto.

The location recognition module 353 and the obstacle recognition module 354 may be integrated as one recognizer and configured as one recognition module 355. In this case, the recognizer may be trained using a learning technique such as machine learning, and the trained recognizer may recognize the properties of a region, an object, etc., by classifying data input thereafter.

According to an embodiment, the Map generation module 352, the location recognition module 353, and the obstacle recognition module 354 may be configured as one integrated module.

The traveling control module 351 may control traveling of the robotic cleaner 100 and control traveling of the traveling unit 360 according to a traveling setting.

The traveling control module 351 may recognize a driving path of the robotic cleaner 100 based on the operation of the traveling unit 360. The traveling control module 351 may recognize a current or past movement speed of the robotic cleaner 100, a distance by which the robotic cleaner 100 has traveled, and the like based on a rotational speed of the driving wheel 136, and the location of the robotic cleaner on the map may be updated based on the recognized traveling information.

The Map generation module 352 may generate a map for the traveling region.

The Map generation module 352 may generate and/or update the map in real time based on the acquired information while the robotic cleaner 100 is traveling, for example.

The Map generation module 352 may set a plurality of movement directions. For example, when a function for generating a map for a traveling region (hereinafter, a map generating function) is executed, the Map generation module 352 may set a direction in which a front surface of the robotic cleaner 100 faces at a time the function is executed as a first movement direction. In addition, the Map generation module 352 may set a direction in which a left side of the robotic cleaner 100 faces as a second movement direction, a direction in which a right side of the robotic cleaner 100 faces as a third direction, and a direction in which a rear surface of the robotic cleaner 100 faces, which is the direction opposite to the first direction, as a fourth movement direction.

In this drawing, the plurality of movement directions are described as being set in four directions, but the present disclosure is not limited thereto and various directions such as eight directions, sixteen directions, and the like, may be set according to various embodiments.

The Map generation module 352 may create a map based on the information acquired through the LiDAR sensor 175.

The Map generation module 352 may acquire geometry information of the traveling region by analyzing a reception pattern such as a reception time difference and signal strength of a laser output through the LiDAR sensor 175 and reflected and received from an external object. The geometry information of the traveling region may include, for example, locations of, distances to, and directions of, objects existing around the robotic cleaner 100.

The Map generation module 352 may generate a grid map based on the geometry information of the traveling region acquired through the LiDAR sensor 175, and store information about a plurality of nodes. Such information may be defined as first map data.

The Map generation module 352 may divide the traveling region into a plurality of sub-areas and generate a grid map with different cell data for areas where obstacles exist and areas where obstacles do not exist through the LiDAR sensor 175 while traveling in each sub-area.

The location recognition module 353 may determine a location of the robotic cleaner 100. The location recognition module 353 may determine a location of the robotic cleaner 100, while the robotic cleaner 100 is traveling.

The location recognition module 353 may determine the location of the robotic cleaner 100 based on the acquisition image acquired through the image acquisition unit 320.

For example, while the robotic cleaner 100 is traveling, the location recognition module 353 may map features of each location of the traveling region detected from the acquired image to each location based on the map data generated by the Map generation module 352 and store data regarding the features of each location in the traveling region mapped to each location of the map, as location recognition data, in the storage unit 305.

The location recognition module 353 may calculate similarity (probability) of locations by comparing the features of the traveling region detected from the acquired image and the features of each location of the traveling region included in the location recognition data stored in the storage unit 305 and determine a location with largest similarity, as a location of the robotic cleaner 100, based on the calculated similarity (probability) of the locations.

According to an embodiment of the present disclosure, the robotic cleaner 100 may extract features from the image acquired through the image acquisition unit 320, and determine a location of the robotic cleaner 100 by substituting the extracted features into the mapped grid map.

The robotic cleaner 100 may determine a current position by learning the map through, for example, the traveling control module 351, the Map generation module 352, and/or the obstacle recognition module 354 without the location recognition module 353.

The obstacle recognition module 354 may detect an obstacle around the robotic cleaner 100. For example, the obstacle recognition module 354 may detect an obstacle around the robotic cleaner 100 based on the acquired image acquired through the image acquisition unit 320 and/or the sensing data acquired through the sensor unit 370.

For example, the obstacle recognition module 354 may detect an obstacle around the robotic cleaner 100 based on the geometry information of the traveling region acquired through the LiDAR sensor 175.

The obstacle recognition module 354 may determine whether there is an obstacle hindering the robotic cleaner 100 from traveling, while the robotic cleaner 100 is traveling.

When it is determined that an obstacle exists, the obstacle recognition module 354 may determine a traveling pattern such as straight movement or rotation according to properties of the obstacle and transfer the determined traveling pattern to the traveling control module 351.

The robotic cleaner 100 according to an embodiment of the present disclosure may recognize a human being, an object and perform avoiding based on machine learning. Here, machine learning may refer to that a computer learns through data and solves a problem through the data even if a person does not directly instruct logic to the computer.

Deep learning refers to a method of teaching a computer about the humans' way of thinking based on artificial neural networks (ANNs) for constructing artificial intelligence, which may refer to an artificial intelligence technology that a computer may learn by itself like human beings, although human beings does not teach the computer. The artificial neural network (ANN) may be implemented in a software form or in a hardware form such as a chip.

The obstacle recognition module 354 may include an artificial neural network (ANN) in the form of software or hardware in which the properties of the obstacle are learned.

For example, the obstacle recognition module 354 may include a deep neural network (DNN) such as a convolutional neural network (CNN), a recurrent neural network (RNN), or a deep belief network (DBN) trained through deep learning.

The obstacle recognition module 354 may determine the properties of an obstacle included in image data input based on weights between nodes included in the deep neural network (DNN), for example.

In addition, the traveling control module 351 may control driving of the traveling unit 360 based on the recognized properties of the obstacle.

The storage unit 305 may store input data for determining properties of the obstacle and data for learning the deep neural network (DNN). The storage unit 305 may store an original image acquired by the image acquisition unit 320 and an extracted image obtained by extracting a predetermined region. The storage unit 305 may store weights and biases configuring the deep neural network (DNN) structure. For example, the weights and biases configuring the deep neural network structure may be stored in an embedded memory of the obstacle recognition module 354.

Each time a partial region of an image acquired by the image acquisition unit 320 is extracted, the obstacle recognition module 354 may perform a learning process using the extracted image as training data, or after a predetermined number of extracted images are acquired, the obstacle recognition module 354 may perform the learning process.

In other words, the obstacle recognition module 354 may update the deep neural network (DNN) structure such as weight by adding a recognition result each time an obstacle is recognized, or after a predetermined number of training data is secured, the obstacle recognition module 354 may update the DNN structure such as weight by performing the learning process with the secured training data.

Alternatively, the robotic cleaner 100 may transmit the original image or the extracted image acquired by the image acquisition unit 320 to a predetermined server through the communication unit 390, and receive data related to machine learning from the predetermined server. In this connection, the robotic cleaner 100 may update the obstacle recognition module 354 based on data related to machine learning received from the predetermined server.

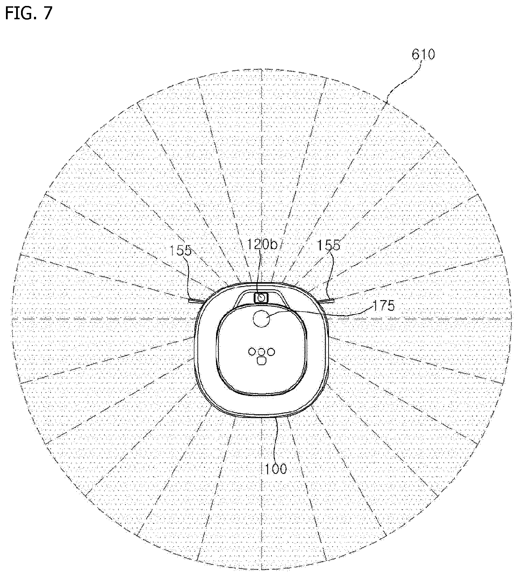

FIG. 7 is a view referred to description of a LiDAR sensor provided in a robotic cleaner according to an embodiment of the present disclosure.

Referring to FIG. 7, the LiDAR sensor 175 may output a laser in all directions of 360 degrees, and receive a laser reflected from an object, thereby acquiring information such as distance to the object, a location, a direction, and a material of the object which reflects the laser and acquiring geometry information of a traveling region.

The robotic cleaner 100 may acquire geometry information within a certain distance according to performance and a setting of the LiDAR sensor 175. The robotic cleaner 100 may acquire geometry information within a circular area 610 having a radius of a predetermined distance 610 based on the LiDAR sensor 175.

The robotic cleaner 100 acquires geometry information within the circular area 610, and in this connection, the geometry information for a predetermined sub-area may be acquired.

In this connection, the geometry information of the LiDAR sensor 175 may store the geometry information within the circular area 610 detected at each point where the robotic cleaner 100 travels a predetermined distance or a predetermined time. In this connection, the stored information may be stored by matching the traveling nodes n1, n2..., which are the current position of the robotic cleaner 100, which is the center of the corresponding circular area 610.

Accordingly, when the robotic cleaner 100 travels in each divided sub-area, the geometry information of each circular area 610 is acquired and stored for a plurality of consecutive traveling nodes n1, n2... within each sub-area.

The robotic cleaner 100 may extract open space from geometry information about the sub-area acquired through the LiDAR sensor 175. Herein, the open space may refer to information about the space between objects that reflect the laser through which the robotic cleaner 100 may travel.

After the traveling of the assigned sub-area ends, the robotic cleaner 100 may perform an open space detection algorithm that checks whether there is an open space by performing ray casting to continuously read the sensing data of the LiDAR sensor 175 for each traveling node n1, n2... within the sub-area.

The robotic cleaner 100 may extract an open space for the sub-area and set an additional open node, in other words, a point at which the robotic cleaner 100 may travel, for the open space.

The robotic cleaner 100 may generate a topology map for the traveling nodes n1, n2... and open nodes of the robotic cleaner 100 for one sub-area.

Information about the open space may include information about the traveling nodes n1, n2... and traveling direction of the robotic cleaner 100 that finds the open space, and the width of the open space, and the open node may include information about the open space in which the open node is found and the traveling nodes n1, n2... of the robotic cleaner 100.

The robotic cleaner 100 may set additional sub-areas by moving to an open node in the topology map, and complete the topology map of a plurality of sub-areas for the entire traveling region by traveling until there are no more open nodes.

In this connection, in order to move along the center of a moving passage, the robotic cleaner 100 may detect the center point of the open space and set the same as an open node, and may travel along the open node.

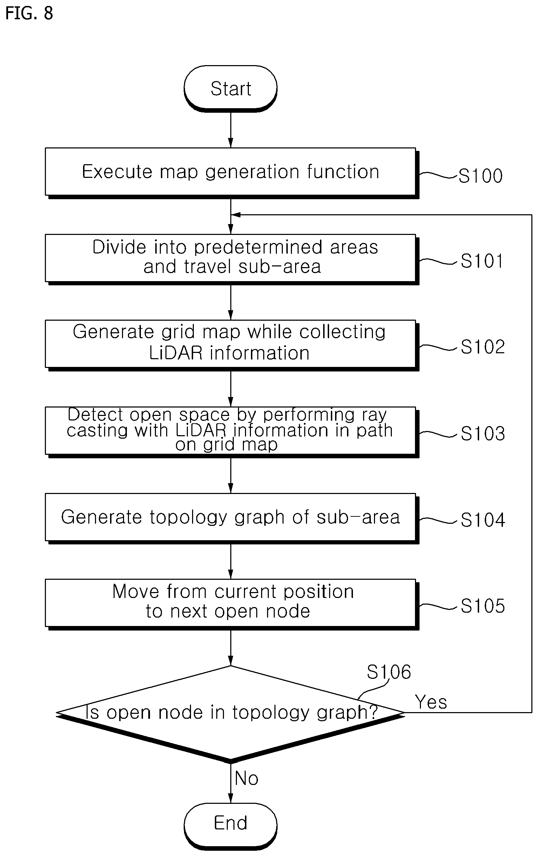

Hereinafter, the process of generating a topology map for each sub-area of the robotic cleaner 100 of an embodiment of the present disclosure will be described with reference to FIGS. 8 to 17.

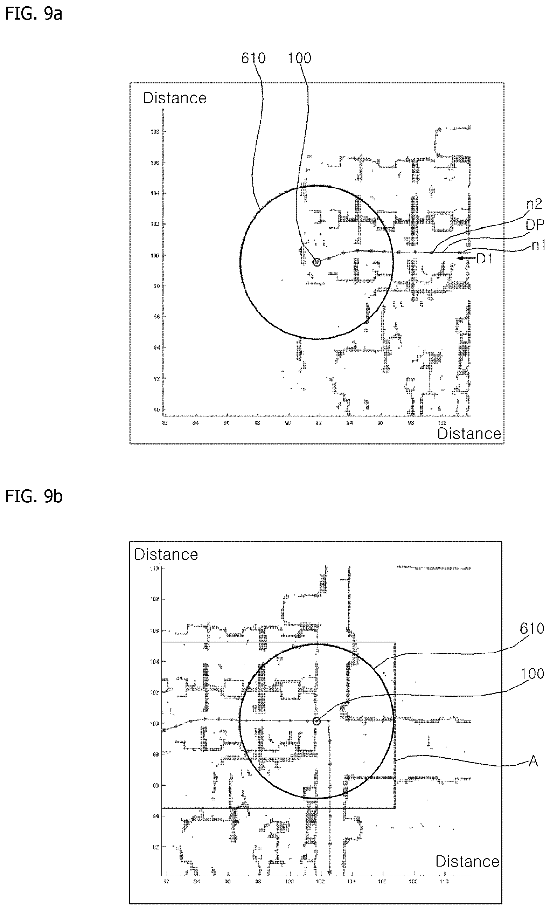

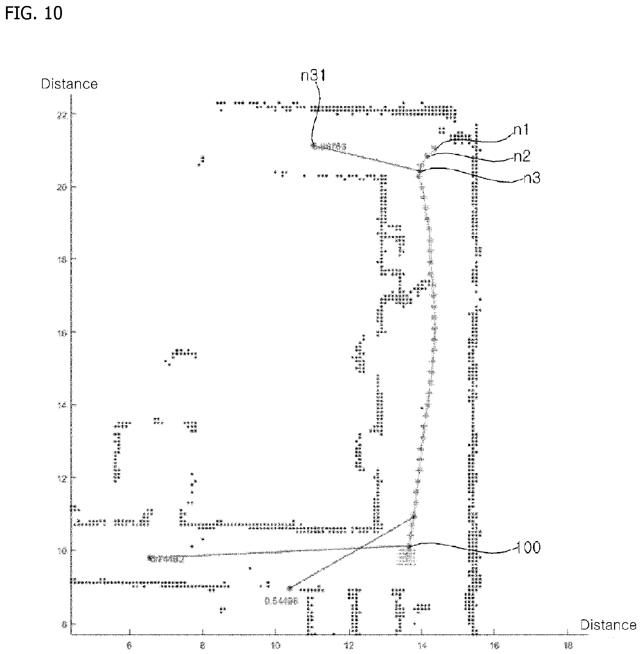

FIG. 8 is a flowchart of a process for generating a map of the robotic cleaner according to an embodiment of the present disclosure, FIGS. 9A to 9E are diagrams illustrating the process for generating the map of the robotic cleaner according to the flowchart of FIG. 8, and FIG. 10 is a diagram illustrating a portion of the final map of the robotic cleaner according to the flowchart of FIG. 8.

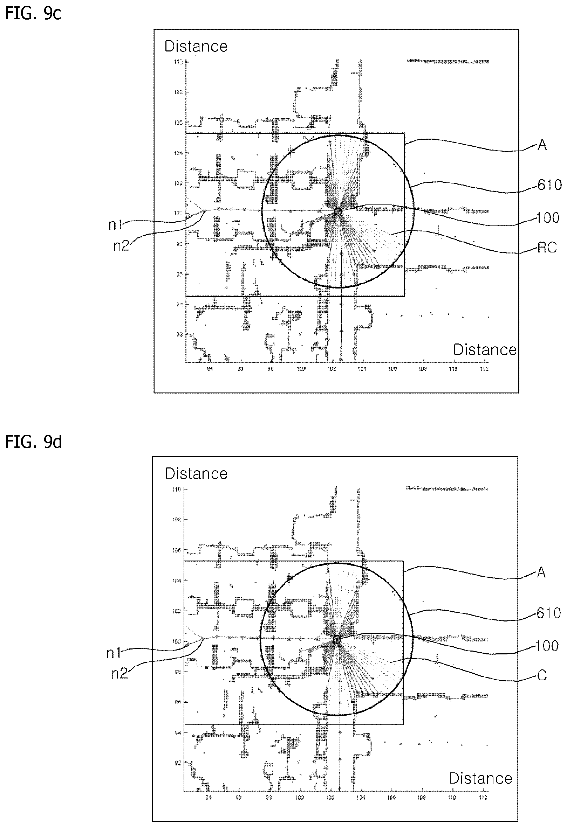

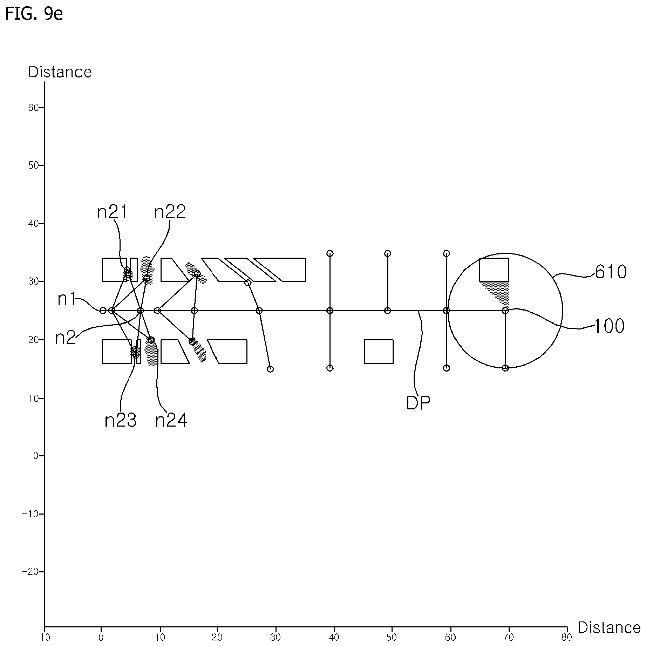

Referring to FIGS. 8 and 9, the robotic cleaner 100 may generate a grid map while moving.

Specifically, as shown in FIG. 8, the robotic cleaner 100 may divide the traveling region into a plurality of sub-areas.

In this connection, the sub-area to be divided may be divided based on the traveling distance or traveling surface area, and may be an arbitrary area for forming a topology map of the moved area after moving a certain distance or for a certain time.

In other words, when the robotic cleaner 100 may travel an unknown traveling region for cleaning for a predetermined distance or a certain time, rather than an equally divided area, and the area traveled for that distance or time may be defined as one sub-area.

In this connection, the sub-area may be defined as the period from a current position of the robotic cleaner 100 until an obstacle is discovered in front, and may be set in various ways depending on the settings of a user.

The robotic cleaner 100 collects LiDAR information of divided sub-areas through the LiDAR sensor 175 while line traveling (S100) to map an unknown traveling region for cleaning work, and generates a grid map. After detecting open space in each grid map, a topology graph is generated for each sub-area.

Specifically, the robotic cleaner 100 collects LiDAR information of an area through the LiDAR sensor 175 while traveling in the sub-area (S101), generates a grip map of the sub-area through the collected LiDAR information (S102), detects open space for a plurality of points by performing ray casting with the LiDAR information on a path on the grid map (S103), generates an open node for the detected open space and generates a topology graph (S104), review whether the open node occurs while moving from a current position to a next open node (S105), and performs a search of different sub-areas depending on whether other open nodes exist in the topology graph (S106).

First, the control unit 350 of the robotic cleaner 100 performs line traveling to generate a cleaning map for a predetermined traveling region according to external or set instructions (S100).

When traveling is performed in this way, the point where traveling is completed for a predetermined distance or a certain time may be defined as a sub-area, and traveling continues in the same direction (D1) until traveling to the corresponding sub-area is completed.

In this connection, the robotic cleaner 100 may obtain LiDAR information about the 360-degree circular area 610 from the LiDAR sensor 175, as shown in FIG. 9A (S101). The collected LiDAR information may be collected from each of a plurality of traveling nodes n1, n2... located on a path when the robotic cleaner 100 travels along the path within the sub-area.

The traveling nodes n1, n2... may be set at equal intervals on the path, but are not limited thereto, and may be defined as points where the robotic cleaner 100 is located every predetermined time. The virtual line connecting such traveling nodes n1, n2... may function as a driving path (DP), but is not limited thereto.

The traveling nodes n1, n2... set in one sub-area may have different numbers.

The robotic cleaner 100 collects LiDAR information at each traveling node (n1, n2...).

Accordingly, at each traveling node n1, n2..., local information about the circular area 610 centered on the corresponding traveling node n1, n2... is collected as LiDAR information.

Each of the LiDAR information may be recorded in the storage unit 305 by matching each traveling node n1, n2...

Such LiDAR information may be information about the distance to obstacles within the circular area 610, and may include information such as the distance, position direction, and material of the object that outputs laser and reflects the laser.

When the robotic cleaner 100 collects LiDAR information for each traveling node n1, n2... until the completion of traveling in a sub-area A, as shown in FIG. 9B, a grid map for the corresponding sub-area A is generated.

The grid map is an OGM (Occupancy grid map), which is a map utilizing a grid generated by obtained local information.

The grid map, which is a map for recognizing a surrounding environment of the robotic cleaner 100, may refer to a map that expresses the sub-area A a grid or a cell (hereinafter, a cell) having the same size and indicates the presence or absence of an object in each cell. The presence or absence of an object may be indicated through color. For example, a white cell may indicate a region without an object and a gray cell may indicate a region with an object. Accordingly, a line connecting the gray cells may represent a boundary line (wall, obstacle, etc.) of a certain space. The color of the cell may be changed through an image processing process.

In this connection, the control unit 350 may generate a grid map while traveling in an unknown sub-area A. In contrast, the control unit 350 may generate a grid map of the sub-area A after traveling in the sub-area A is completed.

In an embodiment of the present disclosure, the grid map generation stage (S102) may be set to generate a grid map while traveling in the sub-area A.

While traveling on a path, the control unit 350 may generate a grid map based on the LiDAR information of the LiDAR sensor 175 received for the corresponding traveling node n1, n2... at a predetermined point, in other words, the traveling nodes n1, n2... In other words, the control unit 350 may generate a grid map within the sensing range of the LiDAR sensor 175 by generating a node and moving to the generated node.

When a grid map is generated, the sensing range of the LiDAR sensor 175 may exceed the sub-area A.

The control unit 350 generates a grid map based on each piece of LiDAR information received from each traveling node n1, n2..., and thus the grid map may be sequentially updated as traveling progresses. Accordingly, when traveling in the corresponding sub-area A is finally completed, the grid map may be updated for the last time and the final grid map may be stored in the storage unit.

The final grid map stored in this way includes a grid map of the corresponding sub-area, as shown in FIG. 9B, but grid maps for other areas may also be illustrated.

When the final grid map for a predetermined sub-area A is acquired in this way, the control unit 350 ray casts the LiDAR information for the corresponding sub-area A to detect an open space of the sub-area A (S103).

Specifically, as shown in FIG. 9C, it is checked whether there is an open space by performing an open space detection algorithm on the LiDAR information obtained from each traveling nodes n1, n2....

In this connection, the open space determines whether there is an open space in the corresponding traveling nodes (n1, n2...), in other words, an open space without obstacles, by ray casting (RS) the LiDAR information about the circular area 610 obtained for each traveling node n1, n2... in the entire section.

In this connection, the presence or absence of an open space may be defined as a case where the distance between the reflected and obtained LiDAR data is greater than the width of the robotic cleaner 100, but is not limited thereto, and has a numerical value for the reference width. When there is a space with a width wider than the reference width, it may be set as an open space.

In this way, by performing ray casting, in other words, ray projection, of LiDAR information on the 360-degree circular area 610 for each traveling node n1, n2..., rather than only checking LiDAR information for a specific direction, it is possible to check the presence or absence of open space in all directions.

This means that when calculating data by subdividing the same into a specific direction, for example, 4 or 8 directions, the search for an open space that may occur in an unfiltered area may be missed. In particular, when the direction of disposition of the traveling region for cleaning and the direction of the main passage do not match the traveling direction of the robotic cleaner 100, there is a risk that a large number of open spaces may be missed in search.

Accordingly, after dividing into a predetermined sub-area A as in an embodiment of the present disclosure, 360-degree ray casting is performed on the LiDAR information received at each of the plurality of traveling nodes n1, n2... on a path while traveling in the sub-area (A), it is possible to search an open space without missing any direction.

In this way, when ray casting is completed for all traveling nodes n1, n2... of the corresponding sub-area A and a plurality of open spaces are searched, information on each open space, in other words, information on the location and width of the open space and the traveling nodes n1, n2... corresponding to the open space may be stored, respectively.

In this connection, the control unit 350 determines whether each open space overlaps with the open space for other traveling nodes n1, n2..., and sets the open node for the open space for the final open space that has been overlapped.

Such an open node may be set to a point located in the center of the final open space.

In this connection, the control unit 350 may determine the open space by applying various algorithms and set the open node accordingly, which will be described in detail later.

Next, the control unit 350 generates a topology graph for the corresponding sub-area A (S104).

A topology graph may be generated by connecting open nodes set for an open space with the traveling nodes n1, n2... corresponding to the open nodes.

As shown in FIG. 9E, the topology graph generated in this way may represent the open nodes n21, n22, n23, and n24 set for the sub-area A as a graph by connecting the traveling node n2 that discovered the open node. In this connection, the open space obtained by performing 360-degree ray projection on one traveling node n2 and the open nodes n21, n22, n23, and n24 may actually exist in plurality.

Additionally, one open node n21 may be connected to a plurality of traveling nodes n1, and n2.

As an example, the topology graph formed in this way may be illustrated as shown in FIG. 9E, and unmarked blocks are defined as obstacles.

When the topology graph for the corresponding sub-area A is formed in this way, the traveling nodes n1, n2... and the open nodes n21, n22, n23, and n24 may be matched to form a parent-child relationship.

Finally, the topology graph for the sub-area A may be completed by moving to the widest open node among the plurality of open nodes connected to the current position, in other words, the last traveling node of the corresponding sub-area A and then changing the open node to a traveling node, in other words, to a closed node (S105).

In the topology graph for the corresponding sub-area A completed in this way, when a plurality of open nodes exist, traveling in an unknown sub-area is performed while moving to the corresponding open node and setting up another sub-area again (S106).

In this way, when a topology graph is generated by setting a sub-area A at each open node, the topology graph may be generated while determining whether the sub-area A is overlapping.

In this connection, when the generation or duplicate removal of the sub-area A for each open node is completed and each topology graph for all sub-areas is generated, the cleaning map for the entire traveling region may be generated by collecting the same.

In this way, the traveling region for cleaning is divided into a plurality of sub-areas A and generates a grid map with respect to each sub-area A, searches an open space by ray casting to the corresponding grid map and sets open nodes therefor, and then, a topology graph is formed for the open node and the traveling node, respectively.

In this connection, the accuracy of the cleaning map may be increased by generating a topology graph for each sub-area and collecting the same to generate a cleaning map for the entire cleaning region.

Additionally, by 360-degree ray casting of LiDAR data obtained from a plurality of traveling nodes n1, n2... in a small sub-area, a cleaning map for the entire area may be generated without missing open space.

In this connection, the topology graph according to an embodiment of the present disclosure may have the same values as FIG. 10.

In other words, the topology graph for each sub-area may have a graph connecting each traveling node n1, n2, n3... with at least one open node n31,,,, corresponding thereto with a straight line, as shown in FIG. 10. In addition, information about the width of the open space may also be recorded for each open node.

In this connection, the topology graph may be stored in the storage unit 305 by matching the width of the open space.

Meanwhile, the control unit 350 of the robotic cleaner 100 according to an embodiment of the present disclosure may perform various algorithms to search an open space.

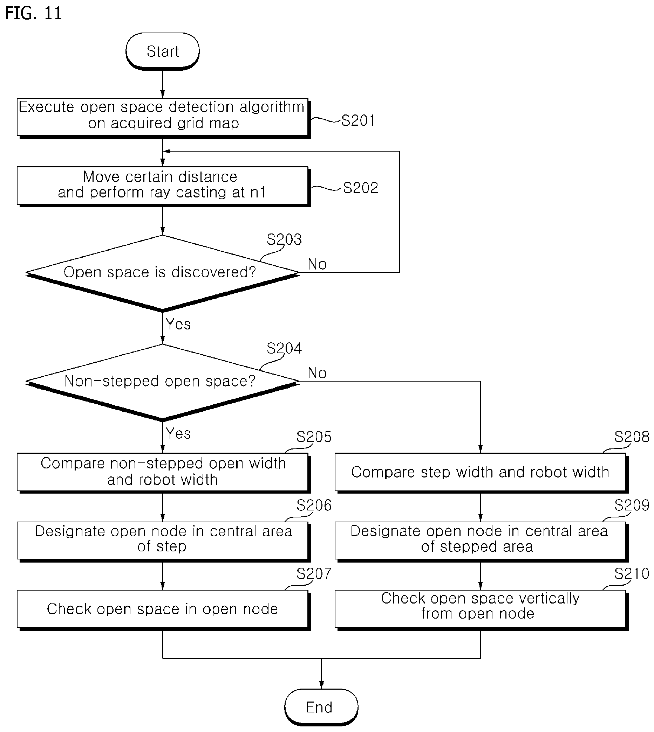

Hereinafter, with reference to FIGS. 11 to 17, the settings of the open space and open node according to an embodiment of the present disclosure will be described in more detail.

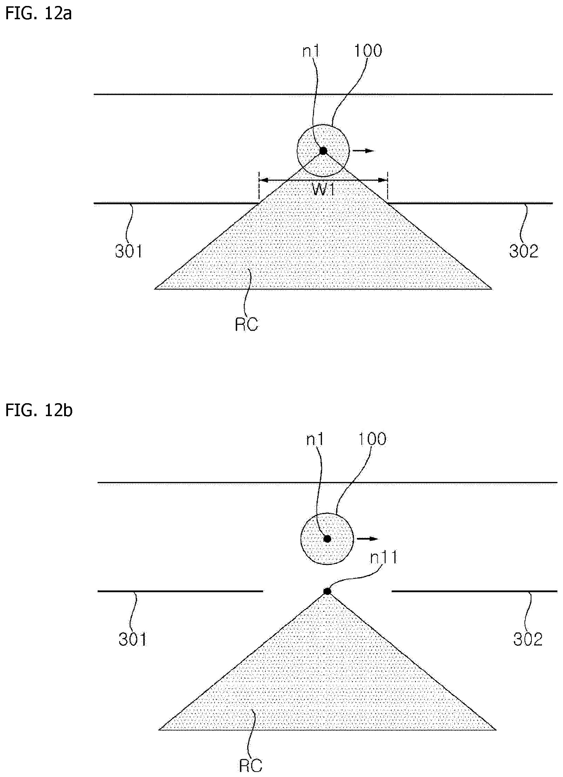

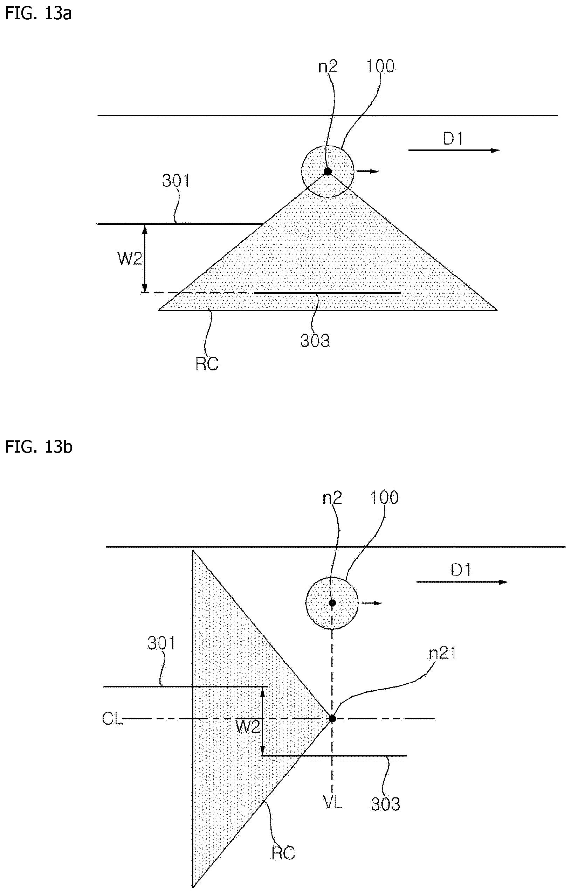

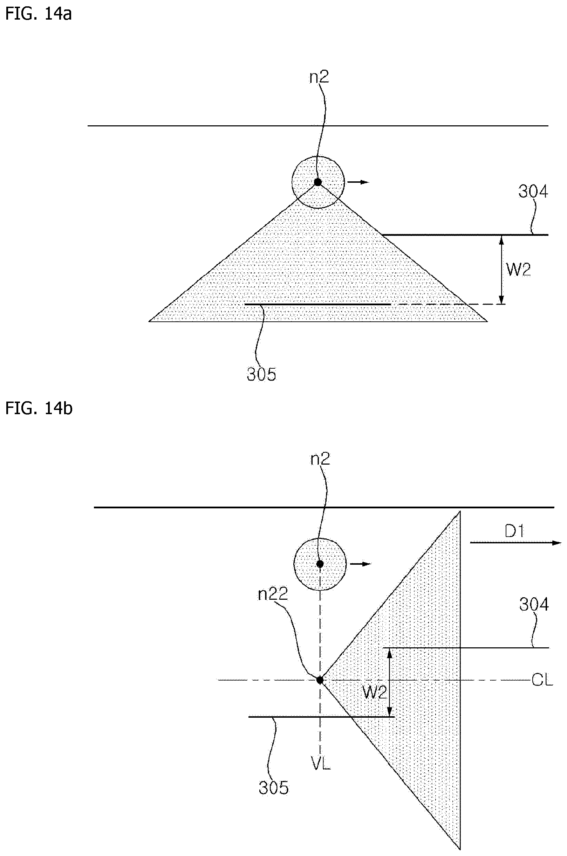

FIG. 11 is a flowchart for searching the open node of FIG. 8. FIGS. 12A and 12B are diagrams illustrating the non-stepped open space of FIG. 11. FIGS. 13A and 13B are diagrams illustrating an embodiment of the stepped open space of FIG. 11. FIGS. 14A and 14B are diagrams illustrating another embodiment of the stepped open space of FIG. 11.

Referring to FIG. 11, the search for an open space according to an embodiment of the present disclosure begins by executing an open space detection algorithm on the acquired grid map of the corresponding sub-area A (S201). According to the execution of the open space detection algorithm, ray casting is performed with the LiDAR information received at each traveling node n1, n2... along the given path (S202).

In this connection, when ray casting is performed at each traveling node n1, n2..., for example, when ray casting is performed at a first traveling node n1 and an open space is not found (S202), ray casting is performed on the LiDAR information obtained again from the second traveling node n2 that has moved a predetermined distance (S203).

By performing the same repeatedly, ray casting for all traveling nodes n1, n2... is performed for 360 degrees and the open space for each traveling node n1, n2... is searched.

In this connection, when an open space is discovered, it is determined whether the open space is a non-stepped open space or a stepped open space (S204).

Specifically, FIGS. 12A and 12B are diagrams illustrating the determination of the control unit 350 when it is a non-stepped open space.

The non-stepped open space means that one obstacle 301 and another obstacle 302 are located at the same distance from each other in the open space between the obstacles 301 and 302 from a current position n1 of the robotic cleaner 100. Accordingly, no step occurs between one obstacle 301 and another obstacle 302.

In other words, the distance from the first traveling node n1, which is the current position of the robotic cleaner 100, to the one obstacle 301 forming an open space and the distance to the another obstacle 302 are equal to each other.

When such a non-stepped open space is discovered, a width w1 of the non-stepped open space is calculated as shown in FIG. 12A (S205).

In this connection, when the width w1 of the non-stepped open space is greater than the width of the robotic cleaner 100, or the width w1 of the non-stepped open space is greater than the reference width set in the robotic cleaner 100, the non-stepped open space is defined as a movable potential open space.

When the non-stepped open space is defined as a potential open space, the central area of the width of the open space is set as an open node n11 for the open space (S206).

In the open node n11 set in this way, a search for the open space n11 may be additionally performed as shown in FIG. 12B (S207).

The control unit 350 stores information about the searched open space and the set open node n11, and stores the width w1 of the open space by matching the traveling node n1 that discovers the same.

When the open space is not a non-stepped open space, in other words, when there is a distance difference between the one obstacle 301 and another obstacle 303 forming the open space and the robotic cleaner 100, the corresponding open space is defined as a stepped open space.

As shown in FIG. 13A , when the corresponding open space is a stepped open space, the one obstacle 301 may protrude from the current traveling node n2 with respect to the another obstacle 303.

In this connection, the stepped open space may be set in two cases, as shown in FIGS. 13 and 14.

In other words, the open space that occurs rearward with respect to the traveling direction, which occurs when the width of the traveling passage suddenly widens, is illustrated in FIGS. 13A and 13B, and the open space that occurs forward with respect to the traveling direction, which occurs when the width of the driving path suddenly narrows, is illustrated in FIGS. 14A and 14B.

When such a stepped open space is discovered, the control unit 350 compares the step width w2 with the reference width or width of the robotic cleaner 100 (S208).

When the width w2 of the step is greater than the reference width or width of the robotic cleaner 100, the corresponding open space may be defined as a potential open space.

Next, the control unit 350 may set an open node n22 in the central area of the open space (S209).

In this connection, unlike the aforementioned open node for a non-stepped open space, the open node n21 may be set to an expansion node n21 located at the intersection of a current traveling node n2 and a vertical line VL on a center line CL of the width of the open space.

In this way, when the open node for the stepped open space is not formed directly in the central area of the open space, but is set to extend to the vertical line VL with the traveling node n2, in the future, LIDAR information for ray casting at the open node n21 may be secured more accurately.

In other words, by setting the open node n21 in an area that does not significantly deviate from the traveling passage, the traveling to obtain LiDAR information for ray casting to an additional open node n21 may be reduced.

Thereafter, the robotic cleaner 100 may perform ray casting on LiDAR information in the left direction from the set open node n21 as shown in FIG. 13B, in other words, in the direction from the open node n21 to the open space (S210).

In other words, the computation of ray casting may be reduced by performing ray casting only in a bisector plane facing the open space.

In the case of FIG. 14B, the robotic cleaner 100 may register the set open node n22 in the topology graph and then perform ray casting for LiDAR information in the right direction, in other words, the direction from the open node n22 to the open space.

In other words, the computation of ray casting may be reduced by performing ray casting only in the bisector plane facing the open space.

When searching for open nodes, the control unit 350 according to an embodiment of the present disclosure may perform duplicate removal on open nodes in a plurality of traveling nodes n1, n2...

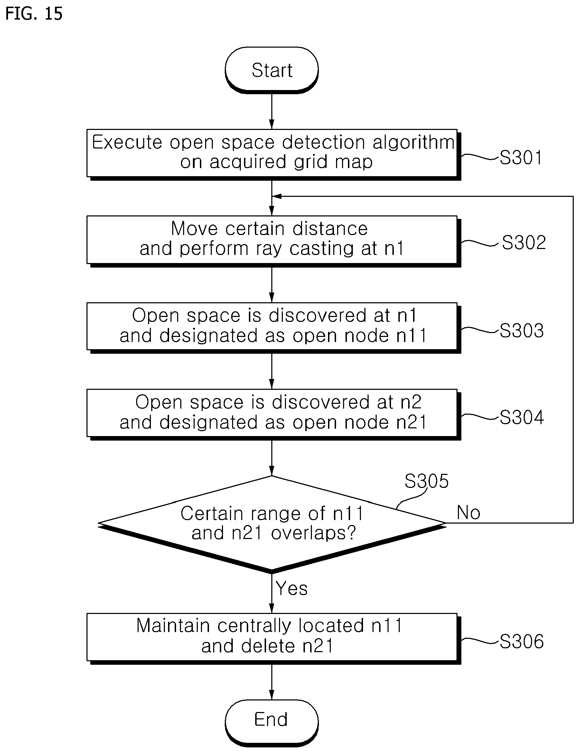

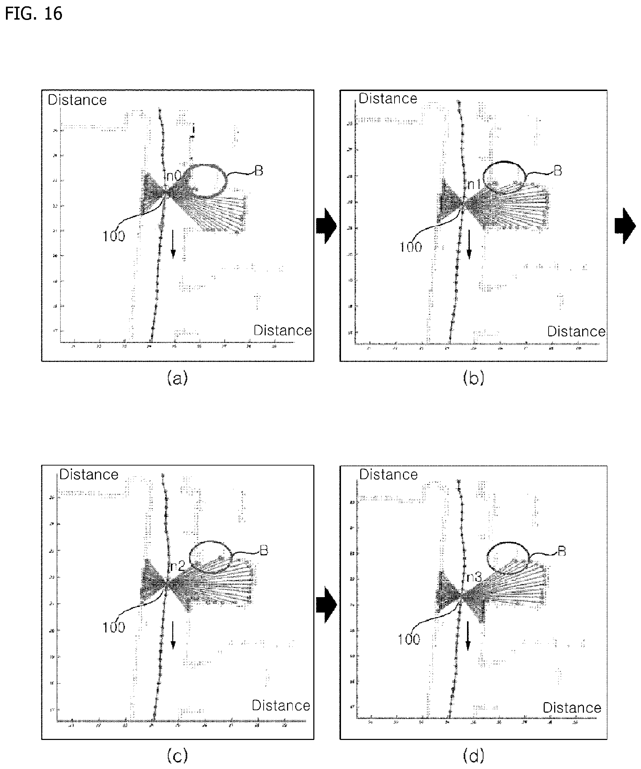

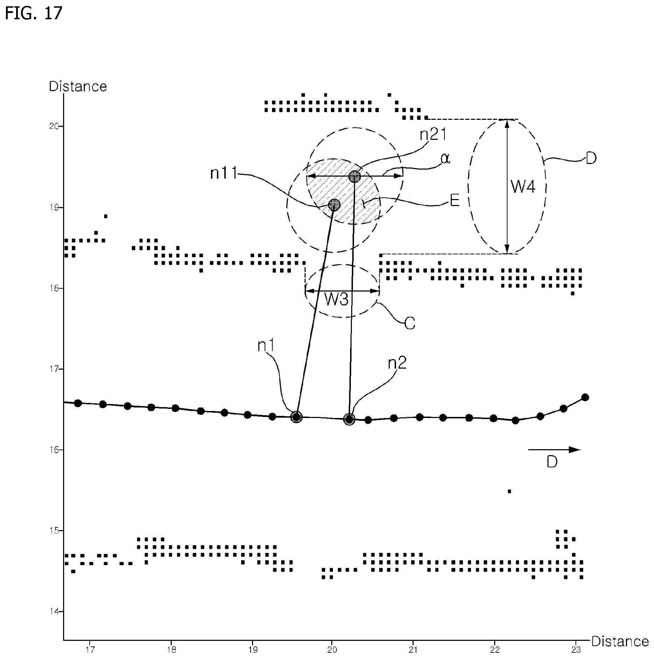

FIG. 15 is a diagram illustrating another flowchart for searching the open node of FIG. 8, FIG. 16 is a diagram illustrating the search of the robotic cleaner 100 showing the operation of FIG. 15, and FIG. 17 is a diagram illustrating the process of the duplicate removal of FIG. 15.

FIGS. 15 to 17 illustrate another example of a method for setting an open space and an open node from a grid map.

First, according to FIG. 15, in the search for an open space according to another embodiment of the present disclosure, an open space detection algorithm is executed on the obtained grid map of the corresponding sub-area A (S301). Then, ray casting is performed by searching the received LiDAR information at each traveling node n1, n2... along the given path (S302).

When ray casting is performed at each traveling node n1, n2..., for example, when ray casting is performed at the first traveling node n1 and an open space is not discovered, ray casting is performed on the LiDAR information obtained again from the second traveling node n2 that has moved a predetermined distance.

By performing the same repeatedly, ray casting for all traveling nodes n1, n2... is performed for 360 degrees and the open space for each traveling node n1, n2... is searched.

In other words, when ray casting is performed on each traveling node n0, n1, n2, n3... by continuously moving the traveling nodes n1, n2... as shown in FIGS. 16A to 16D, as shown in FIG. 16A, in the case of an open space B formed behind an obstacle in the traveling direction, some traveling nodes (no) may not be discovered in ray casting.

In this case, when the traveling nodes n0, n1, n2 are moved by continuous travel of the robotic cleaner 100, in other words, the open space not discovered in the 0th traveling node n0 of FIG. 16A may be discovered in the first and second traveling nodes n1, n2.... In addition, such an open space may be passed over without being discovered again until the third traveling node n3 is reached.

In this way, in the case of an open space that may not be detected using only the algorithm for detecting non-stepped or stepped open space, detection may be performed by overlapping the open spaces discovered in a plurality of traveling nodes n1, n2... as shown in FIGS. 16A to 17.

Specifically, as shown in FIG. 17, in the case of geometry that has some non-stepped open space in the passage and where an open space is additionally formed behind one obstacle, additional search is required for an open space B parallel to the continuous passage behind the non-stepped open space.

In this connection, an open node may be set for the open space B parallel to the passage.

Specifically, as shown in FIG. 17, while a third open space C is searched at the first traveling node n1, an open space D parallel to a passage DP is searched behind the third open space C. Then, it is determined that there is a fourth open space D behind the third open space C.

Accordingly, the control unit 350 sets the central point of the fourth open space D behind the third open space C as the first open node n11 for the first traveling node n1 (S303).

Next, the control unit 350 performs ray casting on the second traveling node n2, which is different from the first traveling node n1, for example, and proceeds in the traveling direction from the first traveling node n1, and determines whether the same third open space C is searched, and then determines whether the fourth open space D is also searched.

When the fourth open space D is searched, the second open node n21 is set in the central area of the fourth open space D based on the second traveling nodes n1, n2... (S304).

In this connection, the absolute positions of the first open node n11 and the second open node n22 may be different from each other.

This is because the direction of the fourth open space D when viewed from the first traveling node n1 and the second traveling node n2 is different, so that the central point of the fourth open space D may be set to be tilted at a predetermined angle.

In this connection, the control unit 350 compares the width W3 of the third open space C and the width W4 of the fourth open space D with each other. When the widths are within a similar range, each predetermined range is set centered on the first open node n11 and the second open node n21.

In this connection, the predetermined range of the first open node n11 may be defined as a circle with the width W3 of the third open space C as the center around the first open node n11, and the predetermined range of the second open node n21 may be defined as a circle with the second open node n21 as the center and the width W3 of the third open space C as the diameter.

In this connection, the surface area of the area E where the predetermined range of the first open node n11 and the predetermined range of the second open node n21 overlap is calculated (S305).

When the surface area of the overlapping area E is greater than a threshold value, the control unit 350 determines that the first open node n11 and the second open node n21 are the same.

In this connection, the threshold value may meet 1/2 or 2/3 of a predetermined range for each open node, but is not limited thereto and may be set in various ways.

When it is determined that the first open node n11 and the second open node n21 are the same, the control unit 350 maintains one open node n11, n21 adjacent to the center of the width W4 of the fourth open space D with respect to the two open nodes n11, n21 and deletes the other open nodes n11, n21 (S306).

Accordingly, in FIG. 17, the first open node n11 is maintained and the second open node n21 is deleted.

In this way, overlapping open nodes may be removed by comparing the ray casting results from different traveling nodes n1, n2... for the space of the grid map that does not correspond to the non-stepped open space or the stepped open space.

Accordingly, it is possible to set open nodes for all open spaces without missing open spaces. In addition, since each open node is not set for the same open space and only one open node is set for one open space, the computation of ray casting and subsequent traveling may be simplified.

In addition, by maintaining an open node adjacent to the central area of the width of the corresponding open space for overlapping open nodes, in the future, the robotic cleaner 100 may be controlled to travel to the center of the passage.

In this way, by removing non-stepped open space, stepped open space, and overlapping open nodes for a plurality of traveling nodes on the grid map, it is possible to search a variety of geometry without missing.

The control unit 350 may form a topology graph for each of the open spaces and open nodes, and may complete a topology graph for the entire traveling area by connecting the topology graphs for a plurality of sub-areas.

This topology graph may function as a basic map to form a cleaning map.

The control unit 350 may check the relationship between each node by referring to the grid map and topology graph and set the optimal path.

In addition, the control unit 350 may fuse image data into the corresponding grid map and create an image.

In such imaging, the shading of each grid map may be displayed as a line by performing border processing algorithms and image processing through brightness differences.

The robotic cleaner 100 may set an optimal path based on the grid map and topology graph imaged at the current position of the robotic cleaner 100.

The method of generating a topology graph formed in this way has the following benefits.

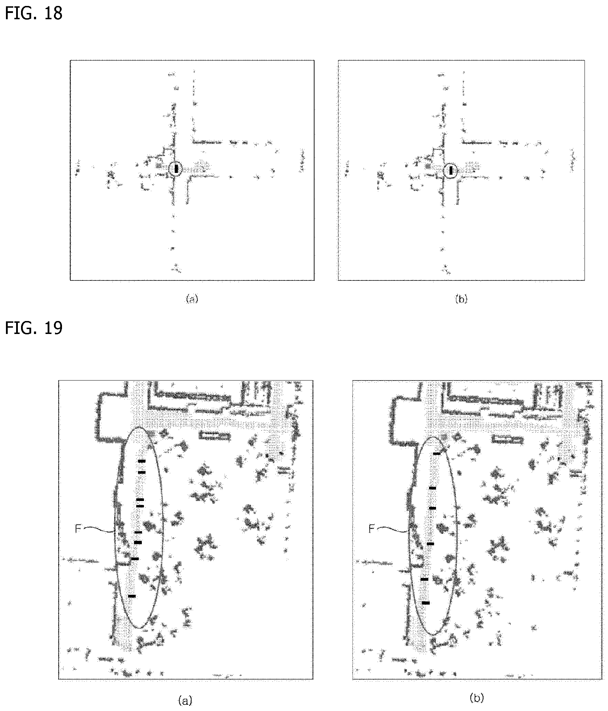

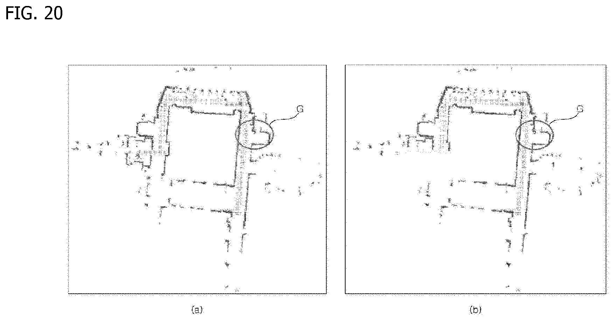

FIG. 18A illustrates open space search according to a comparative example. FIG. 18B illustrates open space search according to an embodiment of the present disclosure. FIG. 19A illustrates multiple open space search according to a comparative example. FIG. 19B illustrates duplicate removal during open space search according to an embodiment of the present disclosure. FIG. 20A shows an unsearched area according to a comparative example. FIG. 20B shows the open space searched by an embodiment of the present disclosure.

The comparative examples of FIGS. 18A, 19A, and 20A illustrate a control method for discovering an open space and generating an open node based on real-time sensing results. FIGS. 18B, 19B, and 20B show that a grid map is acquired while traveling in a predetermined sub-area according to an embodiment of the present disclosure, and that ray casting is performed on the sub-area to set an open space and an open node.

Referring to FIGS. 18A and 18B, in the case of the comparative example, the open space is discovered in real time and the open node is immediately set accordingly, so it is impossible to correct and set the open node to the central area for the open space. In an embodiment of the present disclosure, a grid map is first acquired, and then an open node is found through ray casting at each traveling node on the grid map, so that an open node may be set at the center point of the open space. Accordingly, collisions with obstacles may be dramatically reduced when traveling toward such an open node later. Additionally, since avoidance traveling to avoid collisions is reduced, the execution of wasteful traveling and avoidance algorithms is unnecessary.

Unlike the discovery based on real-time sensing in the comparative example of FIG. 19A, in the search for open space through ray casting on the grid map according to an embodiment of the present disclosure in FIG. 19B, open nodes that are removed are generated by determining whether a plurality of open nodes overlap.

Accordingly, when a plurality of open nodes overlap and represent the same open space, by removing the same, in the future, traveling to search an open space may be dramatically reduced, and the computational load for the ray casting algorithm may be reduced.

In addition, based on real-time sensing results as shown in FIG. 20A, open spaces are passed without being discovered, whereas in the case of an embodiment of the present disclosure, additional open spaces formed behind the open space are searched without missing, as shown in FIG. 20B. Accordingly, by setting up an open node therefor, no open space is missed.

The robotic cleaner 100 according to an embodiment of the present disclosure may not be limited by the configurations and methods of the embodiments described above. The embodiments may be configured in a manner of being selectively combined with one another entirely or in part to enable various modifications.

As such, although the present specifications describe that operations are performed in a predetermined order with reference to a drawing, it should not be construed that the operations are required to be performed sequentially or in the predetermined order, which is illustrated to obtain a preferable result, or that all of the illustrated operations are required to be performed. In some cases, multi-tasking and parallel processing may be advantageous.

The control method of the robotic cleaner 100 according to an embodiment of the present disclosure may be implemented as processor-readable code in a processor-readable recording medium. The processor-readable recording medium may include all types of recording devices storing data readable by a processor. In addition, the examples include a carrier-wave type implementation such as a transmission over the Internet. Furthermore, as the processor-readable recording medium is distributed to a computer system connected via a network, processor-readable code may be saved and executed in a distributed manner.

Further, even though preferred embodiments of the present disclosure have been illustrated and described, the present disclosure is not restricted to a certain embodiment described above, and various modifications and variations can be made by those skilled in the art without departing from the subject matter of the present disclosure as defined by the claims.

### [Detailed Description of Main Elements]

Robotic cleaner: 100
Body: 110
Storage unit: 305
Image acquisition unit: 320
Input unit: 325
Intake unit: 330
Control unit: 350
Traveling unit: 360
Sensor unit: 370

## Claims

1. A robotic cleaner (100), comprising:
a travelling unit (360) for moving a body (110) in a travelling region;
a distance measuring sensor (370) for acquiring distance sensing information about a distance to an object outside the body (110); and
a control unit (350) which generates a grid map about the travelling region from the distance sensing information, performs, when dividing the travelling region into a plurality of sub-areas, ray casting on a plurality of travelling nodes (n1, n2, n3) on a path of the grid map with respect to each sub-area to search for an open space, and sets an open node (n1x, n2x, n3x) for the open space to calculate a topology graph between the traveling nodes (n1, n2, n3) and the open node (n1x, n2x, n3x),
wherein the control unit (350) searches for an open space by executing the ray casting for each of the plurality of travelling nodes (n1, n2, n3) within the grid map with respect to each of the sub-areas, and sets the open node (n1x, n2x, n3x) for each of the open spaces.

2. The robotic cleaner (100) of claim 1, wherein the distance measuring sensor (370) comprises a LiDAR sensor (175) that irradiates light to an object outside the body (110) and calculates the distance sensing information by reflected light.

3. The robotic cleaner (100) of claim 2, wherein the sub-area is allocated as a surface area when the robotic cleaner (100) travels the travel region for a predetermined time or by a predetermined distance.

4. The robotic cleaner (100) of claim 1, wherein the control unit (350) sets the open node (n1x, n2x, n3x) in a central area of a width of the open space.

5. The robotic cleaner (100) of claim 4, wherein, when the open space is formed between two obstacles that are spaced apart without a step, the control unit (350) sets the open node (n1x, n2x, n3x) in the central area of a separation distance between the two obstacles.

6. The robotic cleaner (100) of claim 4, wherein, when the open space is formed between two obstacles spaced apart by a step, the control unit (350) sets the open node (n1x, n2x, n3x) at an intersection of a center line between the two obstacles and a vertical line of the travelling node (n1, n2, n3).

7. The robotic cleaner (100) of claim 4, wherein, when the topology graph for the sub-area is generated, the control unit (350) moves to one of the open nodes (n1x, n2x, n3x) of a last travelling node (n1, n2, n3), changes the moved open node (n1x, n2x, n3x) to a closed node, and then moves to the remaining open nodes (n1x, n2x, n3x) in the topology graph and partitions another sub-area.

8. The robotic cleaner (100) of claim 7, wherein the control unit (350) moves to the open node (n1x, n2x, n3x) with the largest width among a plurality of open nodes (n1x, n2x, n3x) of the last travelling node (n1, n2, n3).

9. The robotic cleaner (100) of claim 7, wherein the control unit (350) determines that the robotic cleaner (100) is able to travel by the ray casting from the travelling node (n1, n2, n3) and that a space in which the robotic cleaner (100) has not previously travelled is the open space.

10. The robotic cleaner (100) of claim 9, wherein the control unit (350) performs 360-degree ray casting around the travelling node (n1, n2, n3).

11. The robotic cleaner (100) of any one of the claims 4 to 10, wherein:
the control unit (350) sets a first open node (n1x, n2x, n3x) for one open space searched for a first travelling node (n1, n2, n3), and sets a second open node (n1x, n2x, n3x) for another open space searched for a second travelling node (n1, n2, n3) that is different from the first travelling node; and
when it is determined that the first open node (n1x, n2x, n3x) and the second open node (n1x, n2x, n3x) overlap, one of the overlapping first and second open nodes (n1x, n2x, n3x) is deleted.

12. The robotic cleaner (100) of claim 11, wherein the control unit (350) determines whether the first open node (n1x, n2x, n3x) and the second open node (n1x, n2x, n3x) overlap when widths of the one open space and the another open space overlap by a predetermined range or more.

13. The robotic cleaner (100) of claim 12, wherein the control unit (350) generates circles of the same diameter centered on the first open node (n1x, n2x, n3x) and the second open node (n1x, n2x, n3x), and determines that the first open node (n1x, n2x, n3x) and the second open node (n1x, n2x, n3x) are related to the same open node (n1x, n2x, n3x) when each circle overlaps by a predetermined range or more, and wherein, among the first open node (n1x, n2x, n3x) and the second open node (n1x, n2x, n3x), one open node (n1x, n2x, n3x) adjacent to the central area of the open area where the first and second open nodes (n1x, n2x, n3x) are located is left, and the other open node (n1x, n2x, n3x) is deleted.

14. The robotic cleaner (100) of claims 12 or 13, wherein the control unit (350) calculates a final topology graph for the travelling region by connecting the topology graphs for the plurality of sub-areas.

## Patentansprüche

1. Reinigungsroboter (100), umfassend:
eine Fahrvorrichtung (360) zum Bewegen eines Gehäuses (110) in einem Fahrbereich;
einen Abstandsmesssensor (370) zum Erfassen von Abstandsmessinformationen über einen Abstand zu einem Objekt außerhalb des Gehäuses (110); und
eine Steuereinheit (350), die aus den Abstandsmessinformationen eine Rasterkarte über den Fahrbereich erzeugt, bei der Aufteilung des Fahrbereichs in mehrere Teilbereiche für jeden Teilbereich Ray-Casting an mehreren Fahrknoten (n1, n2, n3) auf einem Pfad der Rasterkarte durchführt, um nach einem freien Raum zu suchen, und einen freien Knoten (n1x, n2x, n3x) für den freien Raum festlegt, um einen Topologiegraphen zwischen den Fahrknoten (n1, n2, n3) und dem freien Knoten (n1x, n2x, n3x) zu berechnen,
wobei die Steuereinheit (350) nach einem freien Raum sucht, indem sie das Ray-Casting für jeden der mehreren Fahrknoten (n1, n2, n3) innerhalb der Rasterkarte für jeden der Teilbereiche ausführt, und den freien Knoten (n1x, n2x, n3x) für jeden der freien Räume festlegt.

2. Reinigungsroboter (100) nach Anspruch 1, wobei der Abstandsmesssensor (370) einen LiDAR-Sensor (175) umfasst, der Licht auf ein Objekt außerhalb des Gehäuses (110) strahlt und die Abstandsmessinformationen anhand des reflektierten Lichts berechnet.

3. Reinigungsroboter (100) gemäß Anspruch 2, wobei der Teilbereich als Oberflächenbereich zugewiesen wird, wenn der Reinigungsroboter (100) den Fahrbereich für eine vorbestimmte Zeit oder über eine vorbestimmte Strecke durchfährt.

4. Reinigungsroboter (100) nach Anspruch 1, wobei die Steuereinheit (350) den freien Knoten (n1x, n2x, n3x) in einem zentralen Bereich mit einer Breite des freien Raums festlegt.

5. Reinigungsroboter (100) nach Anspruch 4, wobei, wenn der freie Raum zwischen zwei Hindernissen gebildet ist, die ohne Stufe voneinander beabstandet sind, die Steuereinheit (350) den freien Knoten (n1x, n2x, n3x) im mittleren Bereich eines Abstands zwischen den beiden Hindernissen festlegt.

6. Reinigungsroboter (100) nach Anspruch 4, wobei, wenn der freie Raum zwischen zwei Hindernissen gebildet ist, die durch eine Stufe voneinander beabstandet sind, die Steuereinheit (350) den freien Knoten (n1x, n2x, n3x) an einem Schnittpunkt einer Mittellinie zwischen den beiden Hindernissen und einer vertikalen Linie des Fahrknotens (n1, n2, n3) festlegt.

7. Reinigungsroboter (100) nach Anspruch 4, wobei, wenn der Topologiegraph für den Teilbereich erzeugt wird, die Steuereinheit (350) zu einem der freien Knoten (n1x, n2x, n3x) eines zuletzt angefahrenen Knotens (n1, n2, n3) bewegt, den angefahrenen freien Knoten (n1x, n2x, n3x) in einen geschlossenen Knoten umwandelt und sich dann zu den verbleibenden freien Knoten (n1x, n2x, n3x) im Topologiegraphen bewegt und einen weiteren Teilbereich partitioniert.

8. Reinigungsroboter (100) nach Anspruch 7, wobei sich die Steuereinheit (350) zu dem freien Knoten (n1x, n2x, n3x) mit der größten Breite aus einer Vielzahl von freien Knoten (n1x, n2x, n3x) des zuletzt angefahrenen Knotens (n1, n2, n3) bewegt.

9. Reinigungsroboter (100) nach Anspruch 7, wobei die Steuereinheit (350) durch das Ray-Casting vom Fahrknoten (n1, n2, n3) aus ermittelt, dass der Reinigungsroboter (100) in der Lage ist, sich fortzubewegen, und dass ein Bereich, den der Reinigungsroboter (100) zuvor noch nicht befahren hat, der freie Bereich ist.

10. Reinigungsroboter (100) nach Anspruch 9, wobei die Steuereinheit (350) ein 360-Grad-Ray-Casting um den Fahrknoten (n1, n2, n3) herum durchführt.

11. Reinigungsroboter (100) nach einem der Ansprüche 4 bis 10, wobei:
die Steuereinheit (350) einen ersten freien Knoten (n1x, n2x, n3x) für einen freien Raum festlegt, der für einen ersten Fahrknoten (n1, n2, n3) durchsucht wurde, und einen zweiten freien Knoten (n1x, n2x, n3x) für einen anderen freien Raum festlegt, der für einen zweiten Fahrknoten (n1, n2, n3) durchsucht wurde, der sich von dem ersten Fahrknoten unterscheidet; und
wenn festgestellt wird, dass sich der erste freie Knoten (n1x, n2x, n3x) und der zweite freie Knoten (n1x, n2x, n3x), einer der sich überlappenden ersten und zweiten freien Knoten (n1x, n2x, n3x) gelöscht wird.

12. Reinigungsroboter (100) nach Anspruch 11, wobei die Steuereinheit (350) feststellt, ob sich der erste freie Knoten (n1x, n2x, n3x) und der zweite freie Knoten (n1x, n2x, n3x) überlappen, wenn sich die Breiten des einen freien Raums und des anderen freien Raums um einen vorbestimmten Bereich oder mehr überlappen.

13. Reinigungsroboter (100) nach Anspruch 12, wobei die Steuereinheit (350) Kreise mit demselben Durchmesser erzeugt, deren Mittelpunkte auf dem ersten freien Knoten (n1x, n2x, n3x) und dem zweiten freien Knoten (n1x, n2x, n3x) liegen, und feststellt, dass der erste freie Knoten (n1x, n2x, n3x) und der zweite freie Knoten (n1x, n2x, n3x) sich auf denselben freien Knoten (n1x, n2x, n3x) beziehen, wenn sich jeder Kreis um einen vorbestimmten Bereich oder mehr überlappt, und wobei unter dem ersten freien Knoten (n1x, n2x, n3x) und dem zweiten freien Knoten (n1x, n2x, n3x) ein freier Knoten (n1x, n2x, n3x) verbleibt, der an den zentralen Bereich des freien Bereichs angrenzt, in dem sich der erste und der zweite freie Knoten (n1x, n2x, n3x) befinden, und der andere freie Knoten (n1x, n2x, n3x) gelöscht wird.

14. Reinigungsroboter (100) nach Anspruch 12 oder 13, wobei die Steuereinheit (350) einen endgültigen Topologiegraphen für den Fahrbereich berechnet, indem sie die Topologiegraphen für die mehreren Teilbereiche miteinander verbindet.

## Revendications

1. Robot nettoyeur (100), comprenant:
une unité mobile (360) permettant de déplacer un corps (110) dans une zone de déplacement;
un capteur de mesure de distance (370) destiné à acquérir des informations de détection de distance concernant la distance par rapport à un objet situé à l'extérieur du corps (110); et
une unité de commande (350) qui génère une carte quadrillée de la zone de déplacement à partir des informations de détection de distance, effectue, lors de la division de la zone de déplacement en plusieurs sous-zones, un lancer de rayons sur plusieurs nœuds de déplacement (n1, n2, n3) situés sur un chemin de la carte quadrillée par rapport à chaque sous-zone afin de rechercher un espace libre, et définit un nœud ouvert (n1x, n2x, n3x) pour l'espace libre afin de calculer un graphe topologique entre les nœuds de déplacement (n1, n2, n3) et le nœud ouvert (n1x, n2x, n3x),
dans lequel l'unité de commande (350) recherche un espace ouvert en effectuant un lancer de rayons pour chaque nœud de la pluralité des nœuds mobiles (n1, n2, n3) sur la carte quadrillée par rapport à chacune des sous-zones, et définit le nœud ouvert (n1x, n2x, n3x) pour chacun des espaces ouverts.

2. Robot nettoyeur (100) selon la revendication 1, dans lequel le capteur de mesure de distance (370) comprend un capteur LiDAR (175) qui émet de la lumière vers un objet situé à l'extérieur du corps (110) et calcule les informations de mesure de distance à partir de la lumière réfléchie.

3. Robot nettoyeur (100) selon la revendication 2, dans lequel la sous-zone est attribuée en tant que surface lorsque le robot nettoyeur (100) parcourt la zone de déplacement pendant une durée prédéterminée ou sur une distance prédéterminée.

4. Robot nettoyeur (100) selon la revendication 1, dans lequel l'unité de commande (350) positionne le nœud ouvert (n1x, n2x, n3x) dans une zone centrale correspondant à la largeur de l'espace ouvert.

5. Robot nettoyeur (100) selon la revendication 4, dans lequel, lorsque l'espace ouvert est formé entre deux obstacles espacés l'un de l'autre sans dénivelé, l'unité de commande (350) définit le nœud ouvert (n1x, n2x, n3x) dans la zone centrale de la distance de séparation entre les deux obstacles.

6. Robot nettoyeur (100) selon la revendication 4, dans lequel, lorsque l'espace ouvert est formé entre deux obstacles séparés par un dénivelé, l'unité de commande (350) définit le nœud ouvert (n1x, n2x, n3x) à l'intersection d'une ligne médiane entre les deux obstacles et d'une ligne verticale passant par le nœud mobile (n1, n2, n3).

7. Robot nettoyeur (100) selon la revendication 4, dans lequel, lorsque le graphe topologique de la sous-zone est généré, l'unité de commande (350) se déplace vers l'un des nœuds ouverts (n1x, n2x, n3x) d'un dernier nœud de déplacement (n1, n2, n3), transforme le nœud ouvert vers lequel elle s'est déplacée (n1x, n2x, n3x) en un nœud fermé, puis se déplace vers les nœuds ouverts restants (n1x, n2x, n3x) dans le graphe topologique et partitionne une autre sous-zone.

8. Robot nettoyeur (100) selon la revendication 7, dans lequel l'unité de commande (350) se déplace vers le nœud ouvert (n1x, n2x, n3x) présentant la plus grande largeur parmi une pluralité de nœuds ouverts (n1x, n2x, n3x) du dernier nœud mobile (n1, n2, n3).

9. Robot nettoyeur (100) selon la revendication 7, dans lequel l'unité de commande (350) détermine, à partir du tracé de rayons émis par le nœud mobile (n1, n2, n3), que le robot nettoyeur (100) est en mesure de se déplacer et que l'espace ouvert correspond à une zone dans laquelle le robot nettoyeur (100) ne s'est pas encore déplacé.

10. Robot nettoyeur (100) selon la revendication 9, dans lequel l'unité de commande (350) effectue un lancer de rayons à 360 degrés autour du nœud mobile (n1, n2, n3).

11. Robot nettoyeur (100) selon l'une quelconque des revendications 4 à 10, dans lequel:
l'unité de commande (350) définit un premier nœud ouvert (n1x, n2x, n3x) pour un espace ouvert recherché par un premier nœud mobile (n1, n2, n3), et définit un deuxième nœud ouvert (n1x, n2x, n3x) pour un autre espace ouvert recherché pour un deuxième nœud mobile (n1, n2, n3) qui est différent du premier nœud mobile; et
lorsqu'il est déterminé que le premier nœud ouvert (n1x, n2x, n3x) et le deuxième nœud ouvert (n1x, n2x, n3x) se chevauchent, l'un des premier et deuxième nœuds ouverts qui se chevauchent (n1x, n2x, n3x) est supprimé.

12. Robot nettoyeur (100) selon la revendication 11, dans lequel l'unité de commande (350) détermine si le premier nœud ouvert (n1x, n2x, n3x) et le deuxième nœud ouvert (n1x, n2x, n3x) se chevauchent lorsque les largeurs de l'espace ouvert et de l'autre espace ouvert se chevauchent d'une amplitude prédéterminée ou plus.

13. Robot nettoyeur (100) selon la revendication 12, dans lequel l'unité de commande (350) génère des cercles de même diamètre centrés sur le premier nœud ouvert (n1x, n2x, n3x) et le deuxième nœud ouvert (n1x, n2x, n3x), et détermine que le premier nœud ouvert (n1x, n2x, n3x) et le deuxième nœud ouvert (n1x, n2x, n3x) sont associés au même nœud ouvert (n1x, n2x, n3x) lorsque chaque cercle se chevauche d'une amplitude prédéterminée ou plus, et dans lequel, parmi le premier nœud ouvert (n1x, n2x, n3x) et le deuxième nœud ouvert (n1x, n2x, n3x), un nœud ouvert (n1x, n2x, n3x) adjacent à la zone centrale de la zone ouverte de la zone ouverte où se trouvent les premier et deuxième nœuds ouverts (n1x, n2x, n3x) est conservé, et l'autre nœud ouvert (n1x, n2x, n3x) est supprimé.

14. Robot nettoyeur (100) selon les revendications 12 ou 13, dans lequel l'unité de commande (350) calcule un graphe topologique final pour la zone de déplacement en reliant les graphes topologiques des différentes sous-zones.
